# EUROPEAN PATENT APPLICATION

(11) **EP 2 479 976 A1**
(43) Date of publication of application: **25.07.2012**
(21) Application number: 10817081.2
(22) Date of filing: 07.09.2010
(51) Int. Cl.: H04N 5/225, H04N 5/265

(54) **DEVICE, METHOD, AND PROGRAM FOR PROCESSING IMAGE**

(30) Priority: 16.09.2009 JP 2009214765
(71) Applicant: Sony Corporation, Tokyo 108-0075 (JP)
(72) Inventor: YAMASHITA Noriyuki, Tokyo 142-0054 (JP); HIRAI Jun, Tokyo 151-0065 (JP)
(74) Representative: Malden, Nicholas
(86) International application number: PCT/JP2010/065329
(87) International publication number: WO 2011/033968

(57) **Abstract**

The present invention relates to an image processing device and method, and a program, whereby a subject image imaged in a more effective manner can be displayed.

An imaging apparatus 11 images multiple imaged images P(1) through P(N) in a state turning with a turning center C11 as the center. The imaging apparatus 11 trims from each of the obtained multiple imaged images a region determined by a predetermined reference position in the imaged image as a strip-of-paper image, and arrays and synthesizes these strip-of-paper images, thereby generating a panorama image with a predetermined region on imaging space as a subject. The imaging apparatus 11 generates multiple panorama images while shifting a trimming position of a strip-of-paper image from the imaged image, thereby obtaining a panorama moving image made up of the multiple panorama images. According to this panorama moving image, a subject in an imaged image can be displayed with motion. The present invention can be applied to cameras.

## Description

### Technical Field

The present invention relates to an image processing device and method, and a program, and specifically relates to an image processing device and method, and a program, which enables a subject on a panorama image to have motion.

### Background Art

In recent years, users who image a great number of photos have increased due to the spread of digital still cameras. There is also, demand for a method for effectively presenting a great number of imaged photos.

For example, as for an effective presenting method of imaged photos, what we might call a panorama image has been known. The panorama image is a still image obtained by arraying multiple still images obtained by causing an imaging apparatus to perform imaging while panning in a predetermined direction (e.g., see PTL 1), such that a same subject in these still images is overlaid.

According to such a panorama image, space wider than the imaged range (field angle) of one still image according to a normal imaging apparatus can be displayed as a subject, and accordingly, a subject image imaged in a more effective manner can be displayed.

### Citation List

### Patent Literature

PTL 1: Japanese Patent No. 3168443

### Summary of Invention

### Technical Problem

Incidentally, in the event that multiple still images have been imaged while panning an imaging apparatus to obtain a panorama image, some of the still images may include the same subject. In such a case, the same object on different still images is a subject imaged at mutually different point-in-time, and accordingly, it can be said that a still image group imaged for generating a panorama image has information relating to the motions of the subject.

However, with the above panorama image, the motion of a subject included in the panorama image cannot be expressed, and accordingly, it cannot be said that the image of an imaged subject is displayed in a sufficiently effective manner.

The present invention has been made in light of such a situation, and enables the image of an imaged subject to be displayed in a more effective manner.

### Solution to Problem

An image processing device according to an aspect of the present invention includes: positional information generating means configured to generate, based on a plurality of imaged images imaged and obtained by imaging means while moving the imaging means, at the time of arraying a plurality of the imaged images on a predetermined plane so that the same subject included in the different imaged images is overlapped, positional information indicating the relative positional relation of each of the imaged images; strip-of-paper image generating means configured to trim, regarding each of a plurality of the imaged images, in the event of arraying a plurality of the imaged images on a plane based on the positional information, a region on the imaged image from a predetermined reference position on the imaged image to the reference position of another imaged image arrayed in a manner overlapped with the imaged image on the plane to generate a strip-of-paper image including the region; and panorama image generating means configured to generate a single panorama image by arraying and synthesizing each of the strip-of-paper images obtained from a plurality of the imaged images; with the strip-of-paper image generating means generating, regarding a plurality of the imaged images, a plurality of the strip-of-paper images from the imaged images while shifting the region on the imaged images in a predetermined direction; and with the panorama image generating means generating an image group made up of a plurality of the panorama images where the image of the same region on imaging space is displayed by generating the panorama image for each position of the region.

The image processing may further include display control means configured to display a plurality of the panorama images in order with a predetermined time interval.

The positional information generating means may use a plurality of predetermined block regions on the imaged image to generate the positional information by searching for each of block corresponding regions corresponding to a plurality of the block regions out of imaged images imaged prior to the imaged image.

An arrangement may be made wherein the positional information generating means detect the block region including a subject with motion based on the relative positional relations of a plurality of the block regions, and the relative positional relations of a plurality of the block corresponding regions, and in the event that the block region including the subject with motion has been detected, use, of the plurality of the block regions, the block region different from the detected block region to search for the block corresponding region, thereby generating the positional information.

The image processing device may further include: motion detecting means configured to use the imaged image and the imaged image imaged prior to the imaged image thereof to detect motion from the imaged image; and imaging control means configured to control the imaging means so that in the event that the motion has not been detected, the imaged image is imaged with a first time interval, and in the event that the motion has been detected, the imaged image is imaged with a second time interval that is shorter than the first time interval.

The image processing device may further include: motion detecting means configured to use the imaged image and the imaged image imaged prior to the imaged image thereof to detect motion from the imaged image; and discarding means configured to discard the imaged image from which the motion has not been detected; with the discarded imaged image being not used for generation of the strip-of-paper images.

The image processing device may further include: motion detecting means configured to use the imaged image and the imaged image imaged prior to the imaged image thereof to detect motion from the imaged image; and moving means configured to move the imaging means at speed corresponding to the detection result of the motion.

The strip-of-paper image generating means may generate a first strip-of-paper image from the imaged image with a first position as the reference position, and also generate a second strip-of-paper image from the imaged image with a second position different from the first position as the reference position; with the panorama image generating means generating a first panorama image group and a second panorama image group that have mutually disparity based on the first strip-of-paper image and the second strip-of-paper image obtained from a plurality of the imaged images.

An image processing method or program according to an aspect of the present invention includes: a positional information generating step arranged to generate, based on a plurality of imaged images imaged and obtained by imaging means while moving the imaging means, at the time of arraying a plurality of the imaged images on a predetermined plane so that the same subject included in the different imaged images is overlapped, positional information indicating the relative positional relation of each of the imaged images; a strip-of-paper image generating step arranged to trim, regarding each of a plurality of the imaged images, in the event of arraying a plurality of the imaged images on a plane based on the positional information, a region on the imaged image from a predetermined reference position on the imaged image to the reference position of another imaged image arrayed in a manner overlapped with the imaged image on the plane to generate a strip-of-paper image including the region; and a panorama image generating step arranged to generate a single panorama image by arraying and synthesizing each of the strip-of-paper images obtained from a plurality of the imaged images; with the strip-of-paper image generating step, regarding a plurality of the imaged images, a plurality of the strip-of-paper images being generated from the imaged image while shifting the region on the imaged image in a predetermined direction, and with the panorama image generating step, the panorama image being generated for each position of the region, thereby generating an image group made up of a plurality of the panorama images where the image of the same region on imaging space is displayed.

With an aspect of the present invention, based on a plurality of imaged images imaged and obtained by imaging means while moving the imaging means, at the time of arraying a plurality of the imaged images on a predetermined plane so that the same subject included in the different imaged images is overlapped, positional information indicating the relative positional relation of each of the imaged images is generated, and regarding each of a plurality of the imaged images, in the event of arraying a plurality of the imaged images on a plane based on the positional information, a region on the imaged image from a predetermined reference position on the imaged image to the reference position of another imaged image arrayed in a manner overlapped with the imaged image on the plane is trimmed to generate a strip-of-paper image including the region, and a single panorama image is generated by arraying and synthesizing each of the strip-of-paper images obtained from a plurality of the imaged images. At this time, regarding a plurality of the imaged images, a plurality of the strip-of-paper images is generated from the imaged image while shifting the region on the imaged image in a predetermined direction, and the panorama image is generated for each position of the region, whereby an image group made up of a plurality of the panorama images where the image of the same region on imaging space is displayed is generated. Advantageous Effects of Invention

According to an aspect of the present invention, an imaged subject image can be displayed in a more effective manner.

### Brief Description of Drawings

[Fig. 1] Fig. 1 is a diagram illustrating a configuration example of an embodiment of an imaging apparatus to which the present invention has been applied.
[Fig. 2] Fig. 2 is a diagram illustrating a configuration example a signal processing unit.
[Fig. 3] Fig. 3 is a diagram for describing an imaged image imaging method.
[Fig. 4] Fig. 4 is a flowchart for describing panorama moving image generation processing.
[Fig. 5] Fig. 5 is a diagram for describing position matching of imaged images.
[Fig. 6] Fig. 6 is a diagram for describing calculation of center coordinates.
[Fig. 7] Fig. 7 is a diagram for describing trimming of a strip-of-paper image.
[Fig. 8] Fig. 8 is a diagram for describing generation of a panorama moving image.
[Fig. 9] Fig. 9 is a diagram illustrating another configuration example of the signal processing unit.
[Fig. 10] Fig. 10 is a flowchart for describing panorama moving image generation processing.
[Fig. 11] Fig. 11 is a diagram illustrating another configuration example of the signal processing unit.
[Fig. 12] Fig. 12 is a flowchart for describing panorama moving image generation processing.
[Fig. 13] Fig. 13 is a diagram for describing an imaged image imaging method.
[Fig. 14] Fig. 14 is a diagram illustrating another configuration example of the signal processing unit.
[Fig. 15] Fig. 15 is a flowchart for describing panorama moving image generation processing.
[Fig. 16] Fig. 16 is a diagram for describing disparity.
[Fig. 17] Fig. 17 is a diagram for describing trimming of a strip-of-paper image.
[Fig. 18] Fig. 18 is a diagram for describing generation of a stereoscopic panorama moving image.
[Fig. 19] Fig. 19 is a diagram illustrating another configuration example of the imaging apparatus.
[Fig. 20] Fig. 20 is a diagram illustrating another configuration example of the signal processing unit.
[Fig. 21] Fig. 21 is a flowchart for describing stereoscopic panorama moving image generation processing.
[Fig. 22] Fig. 22 is a diagram illustrating a configuration example of a computer.

### Description of Embodiments

Hereafter, embodiments to which the present invention has been applied will be described with reference to the drawings.

### First Embodiment

### Configuration of Imaging Apparatus

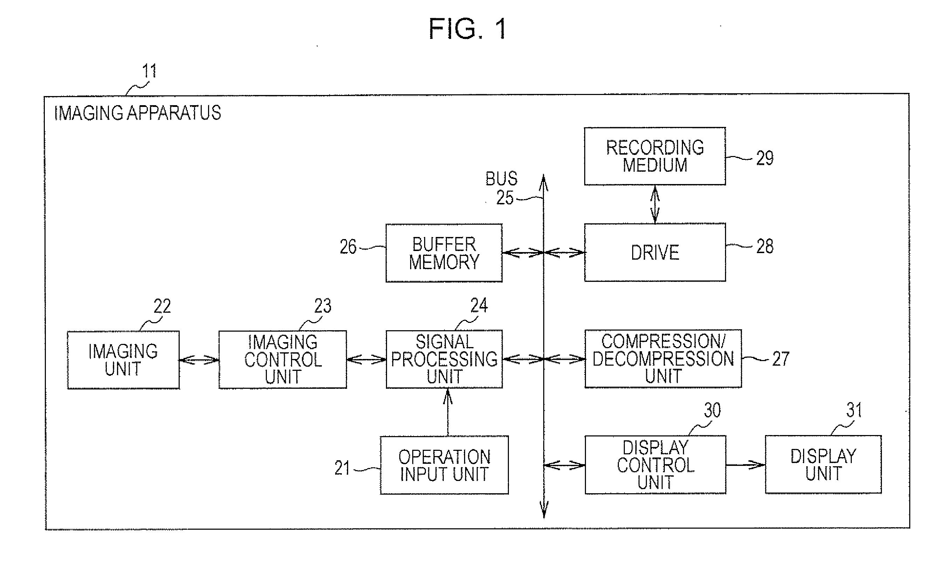

Fig. 1 is a diagram illustrating a configuration example of an embodiment of an imaging apparatus to which the present invention has been applied.

An imaging apparatus 11 is made up of, for example, a camera, wherein the imaging apparatus 11 generates a single panorama moving image from multiple imaged images which the imaging apparatus 11 consecutively imaged in a state in which the imaging apparatus 11 is moving.

The panorama moving image is an image group made up of multiple panorama images where a region in a wider range than an imaging range (field angle) on real space that the imaging apparatus 11 can image by one-time imaging is displayed as a subject. Accordingly, it can also be said that the panorama moving image is a single moving image if we consider that each panorama image making up the panorama moving image is one frame of image, and it can also be said that the panorama moving image is a still image group if we consider that each panorama image making up the panorama moving image is a still image. Hereafter, in order to simplify description, description will be continued assuming that the panorama moving image is a moving image.

The imaging apparatus 11 is configured of an operation input unit 21, an imaging unit 22, an imaging control unit 23, a signal processing unit 24, a bus 25, buffer memory 26, a compression/decompression unit 27, a drive 28, a recording medium 29, a display control unit 30, and a display unit 31.

The operation input unit 21 is made up of buttons and so forth, receives a user's operation, and supplies a signal corresponding to the operation thereof to the signal processing unit 24. The imaging unit 22 is made up of an optical lens, an imaging device, and so forth, images an imaged image by subjecting light from a subject to photoelectric conversion, and supplies to the imaging control unit 23. The imaging control unit 23 controls imaging by the imaging unit 22, and also supplies the imaged image obtained from the imaging unit 22 to the signal processing unit 24.

The signal processing unit 24 is connected to the buffer memory 26 through drive 28, and display control unit 30 via the bus 25, and controls the entirety of the imaging apparatus 11 in accordance with the signal from the operation input unit 21. For example, the signal processing unit 24 supplies the imaged image from the imaging control unit 23 to the buffer memory 26 via the bus 25, or generates a panorama moving image from the imaged images obtained from the buffer memory 26.

The buffer memory 26 is made up of SDRAM (Synchronous Dynamic Random Access Memory) and so forth, and temporarily records data such as the imaged image supplied via the bus 25. The compression/decompression unit 27 encodes or decodes the image supplied via the bus 25 according to a predetermined format.

The drive 28 records the panorama moving image supplied from the bus 25 in the recording medium 29 or reads out a panorama moving image recorded in the recording medium 29 to output to the bus 25. The recording medium 29 is made up of nonvolatile memory detachable as to the imaging apparatus 11, and records a panorama moving image in accordance with the control of the drive 28.

The display control unit 30 supplies the panorama moving image supplied via the bus 25 to the display unit 31 for display. The display unit 31 is made up of, for example, an LCD (Liquid Crystal Display) and so forth, and displays the panorama moving image in accordance with the control of the display control unit 30.

### Configuration of Signal Processing Unit

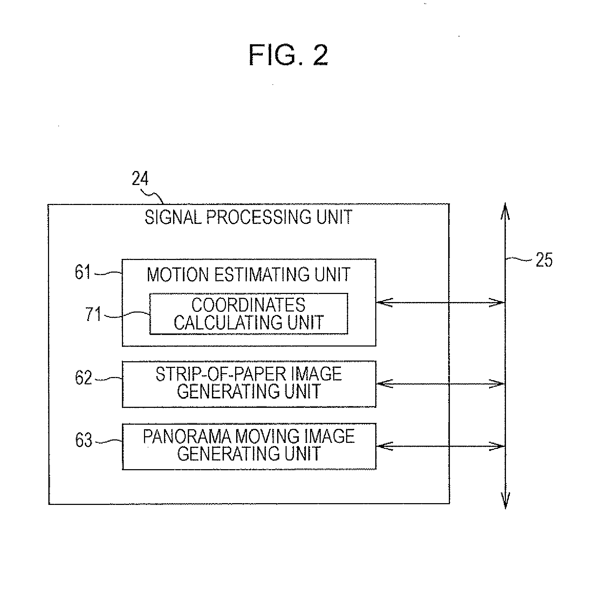

Also, the signal processing unit 24 in Fig. 1 is configured as illustrated in Fig. 2 in more detail.

Specifically, the signal processing unit 24 is configured of a motion estimating unit 61, a strip-of-paper image generating unit 62, and a panorama moving image generating unit 63.

The motion estimating unit 61 performs motion estimation (Motion Estimation) using two imaged images having different imaged point-in-time, that have been supplied via the bus 25. Also, the motion estimating unit 61 includes a coordinates calculating unit 71.

Based on the result of the motion estimation, the coordinates calculating unit 71 generates information indicating the relative positional relation of each imaged image at the time of arraying and disposing those imaged images on a predetermined plane so that the same subject on the two imaged images is overlapped. Specifically, the coordinates of the center position (hereafter, referred to as center coordinates) of the imaged image when providing a two-dimensional x-y coordinates system on a predetermined plane are calculated as information indicating the relative positional relation of the imaged image.

The strip-of-paper image generating unit 62 trims a predetermined region on the imaged image as a strip-of-paper image using the imaged image supplied via the bus 25 and the center coordinates thereof, and supplies to the panorama moving image generating unit 63. The panorama moving image generating unit 63 synthesizes the strip-of-paper images from the strip-of-paper image generating unit 62 to generate multiple panorama images, thereby generating a panorama moving image that is a panorama image group. Here, one frame of panorama moving image, i.e., a single panorama image is an image where a predetermined range (region) on actual space serving as an object to be imaged at the time of imaging of an imaged image is displayed as a subject.

### Description of Imaging Method When Generating Panorama Moving Image

Incidentally, in the event of the user causing the imaging apparatus 11 to generate a panorama moving image, the user operates the imaging apparatus 11 to image an imaged image to be used for generation of a panorama moving image.

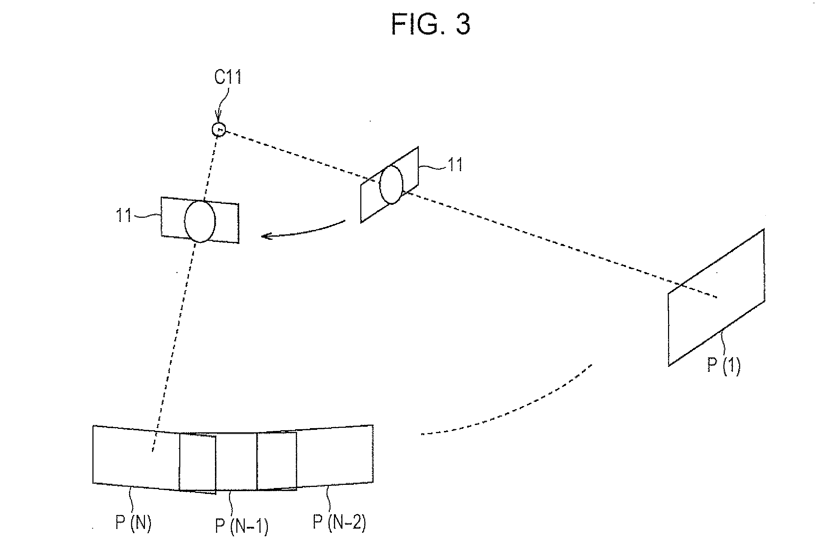

For example, as illustrated in Fig. 3, at the time of imaging an imaged image, the user directs the optical lens of the imaging apparatus 11 toward the near side in the drawing, and continuously images a subject while turning (panning) the imaging apparatus 11 from the left to the right direction with a turning center C11 as the center in the drawing. At this time, the user adjusts the turning speed of the imaging apparatus 11 so that the same object that remains stationary is included in multiple imaged images to be continuously imaged.

In this way, imaged images are imaged while moving the imaging apparatus 11, thereby obtaining N imaged image P(1) through imaged image P(N).

Here, the imaged image P(1) is an image with the oldest imaged point-in-time of the N imaged images, i.e., the first imaged image, and the imaged image P(N) is an image that has been imaged last having the newest imaged point-in-time of the N imaged images. Hereafter, let us say that an imaged image that has been imaged at the n'th (however, 1 ≤ n ≤ N) will also be referred to as imaged image P(n).

Note that each imaged image may be a still image that has continuously been shot, or one frame of image of an imaged moving image.

In this way, upon the N imaged images being obtained, the imaging apparatus 11 uses these imaged images to generate a panorama moving image for display.

Also, in Fig. 3, in the event that a longer imaged image in the vertical direction in the drawing can be obtained at the time of performing imaging with the imaging apparatus 11 itself being rotated by 90 degrees, i.e., being turned sideways, imaging of an imaged image may be performed with the imaging apparatus 11 being turned sideways. In such a case, the imaged image is rotated in the same direction as the imaging apparatus 11 by 90 degrees, and generation of a panorama moving image is performed.

### Description of Panorama Moving Image Generation Processing

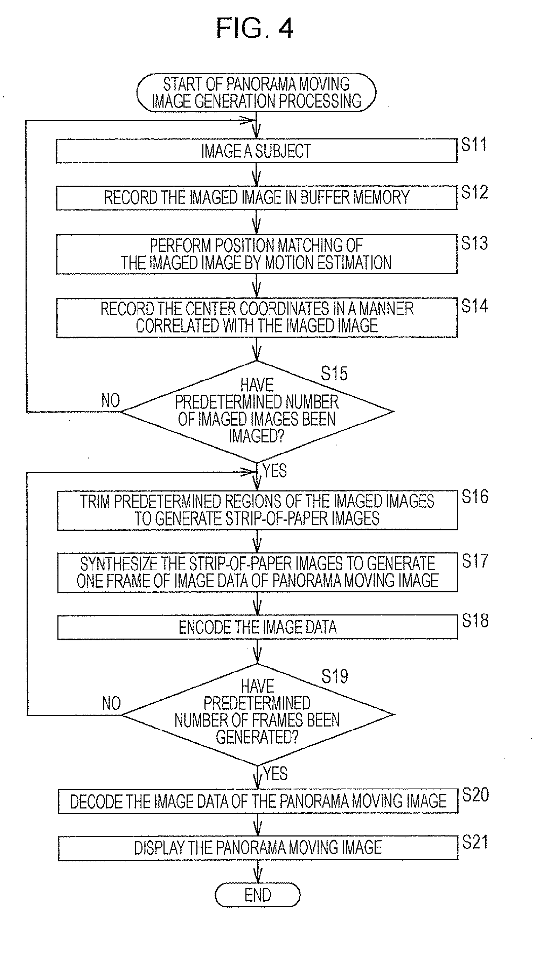

Next, description will be made regarding panorama moving image generation processing for the imaging apparatus 11 imaging imaged images to generate a panorama moving image, with reference to the flowchart in Fig. 4. This panorama moving image generation processing is started upon the operation input unit 21 being operated by the user and generation of a panorama moving image being instructed.

In step S11, the imaging unit 22 images a subject in a state in which the imaging apparatus 11 is moving as illustrated in Fig. 3. Thus, one imaged image (hereafter, referred to as one frame) is obtained. The imaged image imaged at the imaging unit 22 is supplied from the imaging unit 22 to the signal processing unit 24 via the imaging control unit 23.

In step S12, the signal processing unit 24 supplies the imaged image supplied from the imaging unit 22 to the buffer memory 26 via the bus 25 for temporarily recording. At this time, the signal processing unit 24 records the imaged image by adding a frame number to the imaged image so as to determine what number the imaged image to be recorded has been imaged.

Note that, hereafter, the imaged image P(n) imaged at the n'th will also be referred to as the imaged image P(n) of the frame n.

In step S13, the motion estimating unit 61 obtains the imaged images of the current frame n and the immediately previous frame (n-1) thereof from the buffer memory 26 via the bus 25, and performs position matching of the imaged images by motion estimation.

For example, in the event that the imaged image recorded in the buffer memory 26 in the immediately previous step S12 is the imaged image P(n) imaged at the n'th, the motion estimation unit 61 obtains the imaged image P(n) of the current frame n, and the imaged image P(n-1) of the immediately previous frame (n-1).

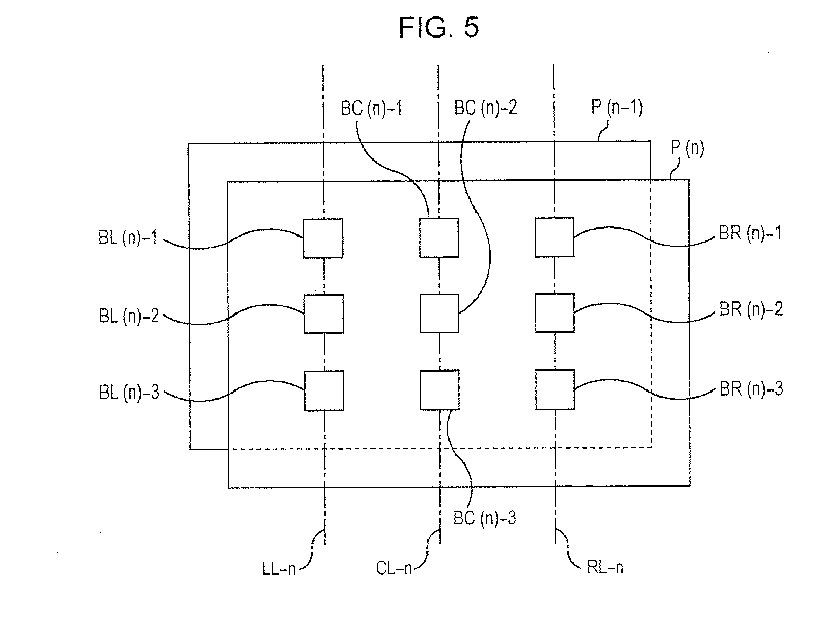

Subsequently, the motion estimating unit 61 searches for, as illustrated in Fig. 5, which positions on the imaged image P(n-1) of the immediately previous frame the same images as with nine blocks BL(n)-1 through BR(n)-3 on the imaged image P(n) exist, thereby performing position matching.

Here, the blocks BC(n)-1 through BC(n)-3 are rectangular regions arrayed in the vertical direction in the drawing on a boundary CL-n that is a vertical straight line in the vertical direction positioned generally in the center of the imaged image P(n) in the drawing.

Also, the blocks BL(n)-1 through BL(n)-3 are rectangular regions arrayed in the vertical direction in the drawing on a boundary LL-n that is an imaginary straight line in the vertical direction positioned on the left side of the boundary CL-n in the drawing of the imaged image P(n). Similarly, the blocks BR(n)-1 through BR(n)-3 are rectangular regions arrayed in the vertical direction in the drawing on a boundary RL-n that is an imaginary straight line in the vertical direction positioned on the right side of the boundary CL-n in the drawing of the imaged image P(n). The positions of these nine blocks BL(n)-1 through BR(n)-3 are determined beforehand.

The motion estimating unit 61 searches for, regarding each of the nine blocks on the imaged image P(n), a region on the imaged image P(n-1) that has the same shape and size as the block thereof, and has the smallest region difference as to the block (hereafter, referred to as "block corresponding region"). Here, the difference as to the block is the sum of the difference absolute value of the pixel value of a pixel in the same position between the block to be processed, e.g., block BL(n)-1, and a region serving as a block corresponding region candidate, or the like.

Upon such motion estimation being performed, ideally, as to each of the block BL(n)-1 through block BR(n)-3 on the imaged image P(n), a block corresponding region positioned on the imaged image P(n-1) with the same positional relation as the relative positional relation of the block is obtained.

The block corresponding region of the imaged image P(n-1) corresponding to a block to be processed on the imaged image P(n) is a region having the smallest difference as to the block to be processed on the imaged image P(n-1). Therefore, estimation is made wherein the same image as with the block to be processed is displayed in the block corresponding region.

Accordingly, in the event that the imaged image P(n) and the imaged image P(n-1) are arrayed on a predetermined plane in an overlapped manner so that the block BL(n)-1 through block BR(n)-3 are overlapped with the corresponding block corresponding regions, the same subject on these imaged images ought to be overlapped.

However, in reality, a block and a block corresponding region may not have the same positional relation. Therefore, in more detail, the motion estimating unit 61 arrays the imaged image P(n) and the imaged image P(n-1) on a plane so that all of the blocks and the block corresponding regions are generally overlapped, and determines the results thereof as the results of position matching of the imaged images.

Note that, in the event that there is a subject with motion on an imaged image, and the subject thereof is included in a block on the imaged image P(n), obtained nine block corresponding regions do not have the same positional relation with the block BL(n)-1 through block BR(n)-3.

Therefore, in the event that the relative positional relation of each of the obtained block corresponding regions differs from the relative positional relation on a block on the imaged image P(n), a block in which it is estimated that a subject with motion is included is eliminated, and position matching by motion estimation is performed again. That is to say, a block corresponding region having a different relative positional relation as to another block corresponding region is detected, a block on the imaged image P(n) corresponding to the detected block corresponding region is eliminated from the object to be processed, and motion estimation is performed again using only the remaining blocks.

Specifically, let us say that the block BL(n)-1 through block BR(n)-3 are arrayed with an interval of distance QL, with a vertically horizontally equal interval in Fig. 5. For example, distance between the mutually adjacent block BL(n)-1 and the block BL(n)-2, and distance between the block BL(n)-1 and the block BC(n)-1 are both QL. In this case, the motion detecting unit 61 detects a block with motion on the imaged image P(n) based on the relative positional relation of the corresponding block region corresponding to each block.

That is to say, the motion estimating unit 61 obtains distance QM between mutually adjacent block corresponding regions such as between the block corresponding region corresponding to the block BR(n)-3 and the block corresponding region corresponding to the block BC(n)-3.

As a result thereof, let us say that, with regard to the block BR(n)-2 and block BC(n)-3, the absolute value of the difference of distance QM between the block corresponding regions thereof and other adjacent block corresponding regions excluding the block corresponding region of the block BR(n)-3, and the distance QL is equal to or smaller than a predetermined threshold. Also, let us say that the absolute value of the difference of distance QM between the block corresponding regions corresponding to the block BR(n)-2 and block BC(n)-3, and the block corresponding region corresponding to the block BR(n)-3, and the distance QL is equal to or greater than the threshold.

In this case, the block corresponding regions of other blocks different from the block BR(n)-3 are arrayed with the same positional relation as the relative positional relation of each block. However, only the block corresponding region of the block BR(n)-3 has a positional relation different from the positional relation of each block as to the other block corresponding regions. In the event that such a detection result has been obtained, the motion estimating unit 61 determines that the block BR(n)-3 includes a subject with motion.

Note that as for detection of a block with motion, not only distance between mutually adjacent block corresponding regions but also a rotational angle as to another block corresponding region adjacent to a block corresponding region of interest, or the like may be employed. Specifically, for example, in the event that there is a block corresponding region more inclined than a predetermined angle as to another block corresponding region, determination is made that the block corresponding to the block corresponding region thereof includes a subject with motion.

In this way, upon a block with motion being detected, the motion estimating unit 61 performs position matching between the imaged image P(n) and the imaged image P(n-1) again by motion estimation using the remaining blocks excluding the block with motion thereof.

In this way, position matching is performed using blocks alone including a subject with no motion, i.e., what we might call scenery alone by excluding blocks including a subject with motion, whereby position matching can be performed in a more accurate manner. In the event of arraying the imaged image P(n) and the imaged image P(n-1) in accordance with the results of this position matching, these imaged images can be arrayed so that a subject with no motion is overlapped.

Upon position matching being performed, next, the coordinates calculating unit 71 calculates the center coordinates of the imaged image P(n) when arraying the imaged image P(1) through imaged image P(n) that have been imaged so far on a predetermined plane, i.e., on the x-y coordinates system in accordance with the result of the position matching of each frame.

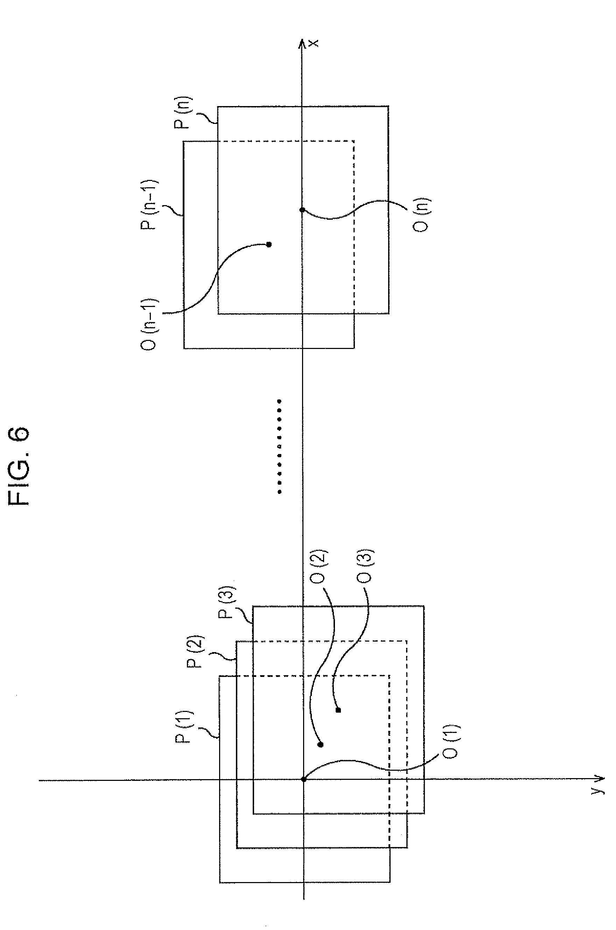

For example, as illustrated in Fig. 6, the respective imaged images are arrayed so that the center of the imaged image P(1) is the position of the origin in the x-y coordinates system, and the same subject included in the imaged images is overlapped. Note that in the drawing, the horizontal direction indicates the x direction, and the vertical direction indicates the y direction. Also, the respective points O(1) through O(n) on the imaged image P(1) through the imaged image P(n) indicate the center positions of these imaged images.

For example, if we say that the imaged image of the current frame to be processed is the imaged image P(n), the center coordinates of the respective center points O(1) through O(n-1) of the imaged image P(1) through the imaged image P(n-1) have already been obtained and recorded in the buffer memory 26.

The coordinates calculating unit 71 reads out the center coordinates of the imaged image P(n-1) from the buffer memory 26, and obtains the center coordinates of the imaged image P(n) from the results of the position matching between the imaged image P(n) and the imaged image P(n-1). That is to say, the x coordinate and y coordinate of the point O(n) are obtained as the center coordinates.

Returning to the description of the flowchart in Fig. 4, upon the position matching being performed in step S13, and the center coordinates of the imaged image P(n) being obtained, the processing proceeds to step S14.

In step S14, the motion estimating unit 61 supplies the obtained center coordinates of the imaged image P(n) to the buffer memory 26, and records this in a manner correlated with the imaged image P(n).

In step S15, the signal processing unit 24 determines whether or not a predetermined number of imaged images have been imaged. For example, as illustrated in Fig. 3, in the event that a region on predetermined space is imaged by being divided into N times, at the time of N imaged images being imaged, determination is made that the predetermined number of imaged images have been imaged.

Note that, in the event that a device capable of detecting the angle that the imaging apparatus 11 has turned, such a gyro sensor or the like, is provided to the imaging apparatus 11, determination may be made whether or not the imaging apparatus 11 has turned by a predetermined angle since imaging of imaged images was started, instead of the number of imaged images. Even in this case, determination may be made whether imaging of imaged images has been performed with a particular region on predetermined space as a subject.

In the event that determination is made in step S15 that the predetermined number of imaged images have not been imaged, the processing returns to step S11, and the imaged image of the next frame is imaged.

On the other hand, in the event that determination is made in step S15 that the predetermined number of imaged images have been imaged, the processing proceeds to step S16.

In step S16, the strip-of-paper image generating unit 62 obtains the N imaged images and the center coordinates thereof from the buffer memory 26, and based on the obtained imaged images and center coordinates, trims a predetermined region of each imaged image to generate a strip-of-paper image.

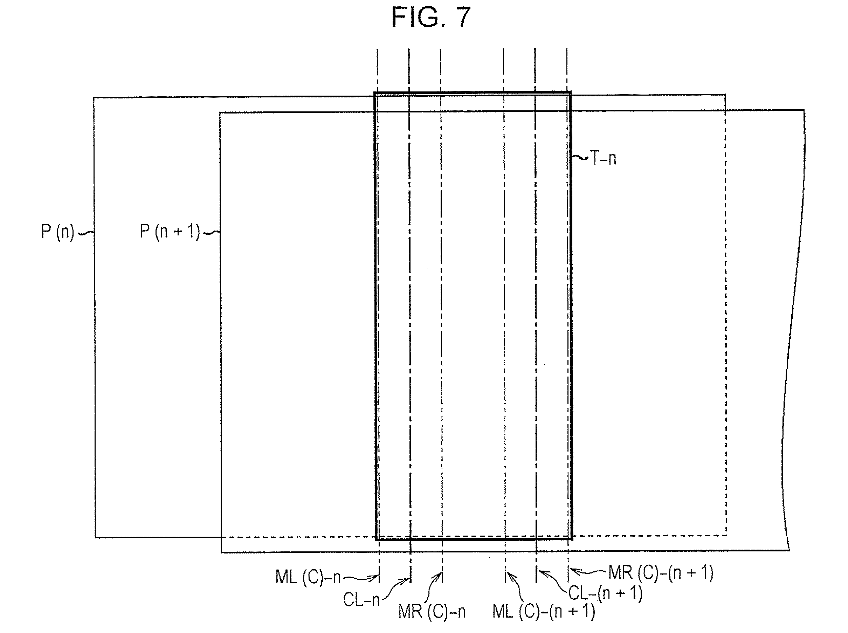

For example, the strip-of-paper image generating unit 62 trims, as illustrated in Fig. 7, a region determined with the boundary CL-n on the imaged image P(n) as a reference, as a strip-of-paper image T-n. Note that the portions in Fig. 7 corresponding to the case in Fig. 5 are denoted with the same reference numerals, and description thereof will be omitted.

In Fig. 7, the imaged image P(n) and imaged image P(n+1) consecutively imaged are arrayed so that the same subject is overlapped, based on the center coordinates thereof. A boundary CL-(n+1) on the imaged image P(n+1) is a boundary corresponding to the boundary CL-n in the imaged image P(n). That is to say, the boundary CL-n and boundary CL-(n+1) are imaginary straight lines in the vertical direction in the drawing, positioned in the same position on the imaged image P(n) and imaged image P(n+1).

Also, in the drawing, the boundary ML(C)-n and boundary MR(C)-n that are straight lines in the vertical direction are straight lines in the vicinity of the boundary CL-n on the imaged image P(n), and are positioned apart on the left side and right side of the boundary CL-n by predetermined distance, respectively.

Similarly, in the drawing, the boundary ML(C)-(n+1) and boundary MR(C)-(n+1) that are straight lines in the vertical direction are straight lines in the vicinity of the boundary CL-(n+1) on the imaged image P(n+1), and are positioned apart on the left side and right side of the boundary CL-(n+1) by predetermined distance, respectively.

For example, in the event of trimming the strip-of-paper image T-n from the imaged image P(n), the strip-of-paper image generating unit 62 trims a region between the positions of the boundary ML(C)-n through the boundary MR(C)-(n+1) on the imaged image P(n) as the strip-of-paper image T-n. Here, the position of the boundary MR(C)-(n+1) on the imaged image P(n) is a position on the imaged image P(n) that is overlapped with the boundary MR(C)-(n+1) when arraying the imaged image P(n) and imaged image P(n+1).

Similarly, in the event that a strip-of-paper image T-(n-1) is trimmed from the imaged image P(n-1), a region between the positions of the boundary ML(C)-(n-1) through the boundary MR(C)-n on the imaged image P(n-1) is trimmed as the strip-of-paper image T-(n-1).

Accordingly, with the strip-of-paper image T-n, a subject in the region between the positions of the boundary ML(C)-n through the boundary MR(C)-n is basically the same subject as the subject in the region between the positions of the boundary ML(C)-n through the boundary MR(C)-n with the strip-of-paper image T-(n-1). However, the strip-of-paper image T-n and strip-of-paper image T-(n-1) are images timed from the imaged image P(n) and imaged image P(n-1) respectively, and the subjects thereof are the same subject, but differ in imaged point-in-time.

Similarly, with the strip-of-paper image T-n, a subject in the region between the positions of the boundary ML(C)-(n+1) through the boundary MR(C)-(n+1) is basically the same subject as the subject in the region between the positions of the boundary ML(C)-(n+1) through the boundary MR(C)-(n+1) with the strip-of-paper image T-(n+1).

In this way, in the event that a region determined with a mostly central boundary on an imaged image as a reference is trimmed from the imaged image as a strip-of-paper image, and strip-of-paper images trimmed from the respective imaged images are arrayed, a predetermined range (region) on real space serving as an object to be imaged at the time of imaging of the N imaged images is displayed. A single image obtained by arraying and synthesizing strip-of-paper images obtained from the respective imaged images is taken as one frame of panorama image making up a panorama moving image.

Upon generating strip-of-paper images from the respective imaged images, the strip-of-paper image generating unit 62 supplies the obtained strip-of-paper images and the center coordinates of the respective imaged images to the panorama moving image generating unit 63.

In step S17, the panorama moving image generating unit 63 arrays and synthesizes the strip-of-paper image of each frame based on the strip-of-paper images and center coordinates supplied from the strip-of-paper image generating unit 62 to generate one frame of image data of a panorama moving image, i.e., a single panorama image.

For example, when synthesizing a strip-of-paper image T-n and a strip-of-paper image T-(n-1), the panorama moving image generating unit 63 obtains the pixel value of a pixel of a panorama image by addition with weight regarding regions from the boundary ML(C)-n to the boundary MR(C)-n in these strip-of-paper images.

Specifically, upon arraying the strip-of-paper image T-n and strip-of-paper image T-(n-1) based on the center coordinates, regions from the boundary ML(C)-n to the position of the boundary MR(C)-n in these strip-of-paper images are mutually overlapped. The panorama moving image generating unit 63 performs addition with weight as to the pixel values of mutually overlapped pixels of the strip-of-paper image T-n and strip-of-paper image T-(n-1), and takes the value obtained as a result thereof as the pixel value of a pixel of a panorama image on the position corresponding to these pixels.

Note that, with the strip-of-paper image T-n and strip-of-paper image T-(n-1), weight at the time of addition with weight of pixels of the regions from the boundary ML(C)-n to the boundary MR(C)-n is determined so as to have the following features.

Specifically, with regard to the pixels of the positions from the boundary CL-n to the boundary MR(C)-n, as the position of a pixel approaches from the boundary CL-n to the position of the boundary MR(C)-n, the contribution ratio of the pixels of the strip-of-paper image T-n as to generation of a panorama image is set higher. Conversely, with regard to the pixels of the positions from the boundary CL-n to the boundary ML(C)-n, as the position of a pixel approaches from the boundary CL-n to the position of the boundary ML(C)-n, the contribution ratio of the pixels of the strip-of-paper image T-(n-1) as to generation of a panorama image is set higher.

Also, at the time of generation of a panorama image, the region from the boundary MR(C)-n to the boundary ML(C)-(n+1) of the strip-of-paper image T-n is taken as a panorama image as it is.

Further, at the time of synthesis between the strip-of-paper image T-n and the strip-of-paper image T-(n+1), the pixel value of a pixel of a panorama image is obtained by addition with weight regarding the region between the positions of the boundary ML(C)-(n+1) through the boundary MR(C)-(n+1) of these strip-of-paper images.

Specifically, with regard to the pixels of the positions from the boundary CL-(n+1) to the boundary MR(C)-(n+1), as the position of a pixel approaches from the boundary CL-(n+1) to the position of the boundary MR(C)-(n+1), the contribution ratio of the pixels of the strip-of-paper image T-(n+1) as to generation of a panorama image is set higher. Conversely, with regard to the pixels of the positions from the boundary CL-(n+1) to the boundary ML(C)-(n+1), as the position of a pixel approaches from the boundary CL-(n+1) to the position of the boundary ML(C)-(n+1), the contribution ratio of the pixels of the strip-of-paper image T-n as to generation of a panorama image is set higher.

In this way, at the time of synthesis between strip-of-paper images, regions in the vicinity of the edges of the strip-of-paper images of continuous frames are subjected to addition with weight to obtain the pixel value of a pixel of a panorama image, thereby obtaining a more natural image as compared to a case where strip-of-paper images are simply arrayed to obtain a single image.

For example, in the event of simply arraying strip-of-paper images to obtain a panorama image, irregularities in brightness may be caused for each region of the panorama image if the outline of a subject around the edges of the strip-of-paper images is distorted, or the brightness of the strip-of-paper images of continuous frames differs.

Therefore, with the panorama moving image generating unit 63, regions in the vicinity of the edges of strip-of-paper images are synthesized by addition with weight, thereby preventing the outline of a subject from being distorted, or irregularities in brightness from being caused, whereby a more natural panorama image can be obtained.

Also, an arrangement may be made wherein at the time of position matching of imaged images, based on the imaged images, the motion estimating unit 61 detects lens distortion in the optical lens making up the imaging unit 22, and at the time of synthesis of strip-of-paper images, the strip-of-paper image generating unit 62 uses the detection result of lens distortion to correct the strip-of-paper images. That is to say, based on the detection result of lens distortion, distortion caused in the strip-of-paper images is corrected by image processing.

One frame of panorama moving image obtained as described above is an image where a predetermined region in space serving as an object to be imaged at the time of imaging of imaged images is displayed as a subject. Upon generating one frame of panorama moving image, the panorama moving image generating unit 63 supplies the image data of the generated panorama moving image to the compression/decompression unit 27 via the bus 25.

In step S18, the compression/decompression unit 27 encodes the image data of the panorama moving image supplied from the panorama moving image generating unit 63, for example, by the JPEG (Joint Photographic Experts Group) format, and supplies to the drive 28 via the bus 25.

The drive 28 supplies the image data of the panorama moving image from the compression/decompression unit 27 to the recording medium 29 for recording. At the time of recording of the image data, the image data is provided with a frame number by the panorama moving image generating unit 63.

In step S19, the signal processing unit 24 determines whether or not the image data of predetermined frame of panorama moving image has been generated. For example, in the event that definition is made that a panorama moving image made up of the image data of M frames is generated, at the time of M frames of image data being obtained, determination is made that predetermined frames of panorama moving image have been generated.

In the event that determination is made in step S19 that predetermined of panorama moving image has not generated yet, the processing returns to step S16, and the image data of the next frame of the panorama moving image is generated.

For example, in the event that the image data of the first frame of a panorama moving image is generated, as described with reference to Fig. 7, a region between the positions of the boundary ML(C)-n through the boundary MR(C)-(n+1) of the imaged image P(n) is trimmed and taken as the strip-of-paper image T-n of the imaged image P(n).

Subsequently, in the event that the image data of the second frame and thereafter of the panorama moving image is generated, the trimming position of the strip-of-paper image T-n from the imaged image P(n) is shifted in the left direction in Fig. 7 by width CW from the boundary CL-n to the boundary CL-(n+1) at a time.

Specifically, let us say that the strip-of-paper image T-n of the m'th frame of the panorama moving image is a strip-of-paper image T(m)-n (however, 1 ≤ m ≤ M). In this case, the trimming position of the strip-of-paper image T(m)-n of the m'th frame is taken as a position shifted from the trimming position of the strip-of-paper image T(1)-n to the left side in Fig. 7 by distance of (m-1) times of the width CW.

Accordingly, for example, a region where the strip-of-paper image T(2)-n of the second frame is trimmed is a region having the same shape and size as those of the strip-of-paper image T-n in Fig. 7 on the imaged image P(n), and is a region where the position of the right edge is the position of the boundary MR(C)-n.

Here, the direction where the trimmed region of the strip-of-paper image is shifted is determined beforehand according to a direction where the imaging apparatus 11 is turned at the time of imaging of an imaged image. For example, the example in Fig. 7 assumes the imaging apparatus 11 being turned so that the center position of the imaged image of the next frame being positioned on the right side in the drawing as to the center position of the imaged image a predetermined frame.

This is because if the trimming position of the strip-of-paper image is shifted each frame in a direction opposite of the direction of the movement of the center position of the imaged image in accordance with movement of the imaging apparatus 11, the same subject with no motion is displayed in the same position in each panorama image making up the panorama moving image.

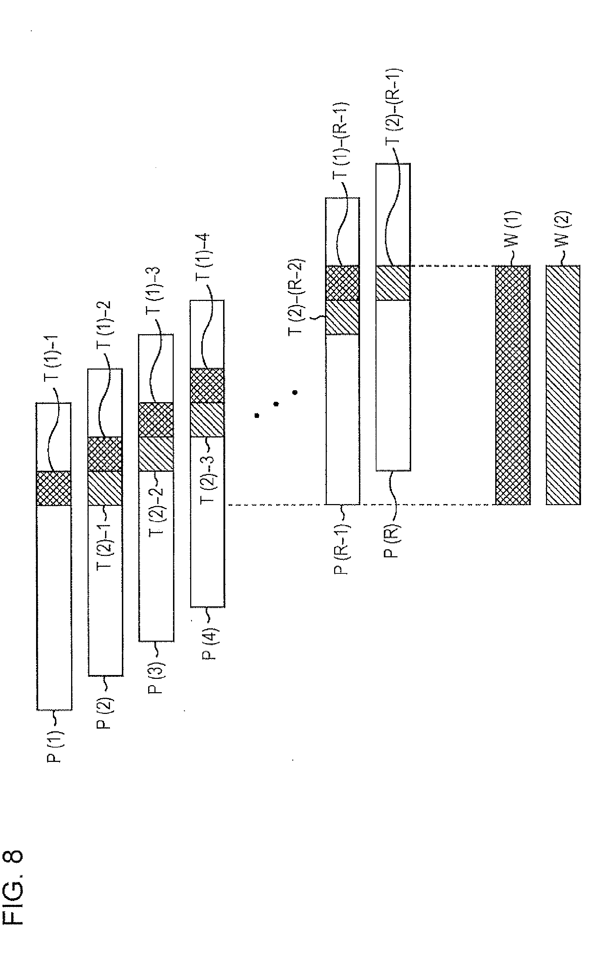

In this way, upon the image data of each frame of a panorama moving image being generated while shifting the trimming position of the strip-of-paper image for each frame, the panorama moving image as illustrated in Fig. 8 is obtained, for example. Note that in Fig. 8, the horizontal direction in the drawing corresponds to the horizontal direction in Fig. 7. For example, the horizontal direction in Fig. 8 corresponds to the x direction of the x-y coordinates system.

With the example in Fig. 8, a strip-of-paper image T(1)-1 through a strip-of-paper image T(1)-(R-1) are generated from (R-1) imaged image P(1) through imaged image P(R-1) (however, R ≤ N) respectively, and these strip-of-paper images are synthesized to obtain a panorama image W(1).

Similarly, a strip-of-paper image T(2)-1 through a strip-of-paper image T(2)-(R-1) are generated from (R-1) imaged image P(2) through imaged image P(R) respectively, and these strip-of-paper images are synthesized to obtain a panorama image W(2).

Here, the panorama image W(1) and panorama image W(2) are images making up the first frame and the second frame of a panorama moving image, respectively. Also, for example, the trimming region of the strip-of-paper image T(2)-1 in the imaged image P(2) is taken as a region in the position obtained by shifting the trimming region of the strip-of-paper image T(1)-2 to the left side by the width CW in the drawing. The size of this width CW is changed for each frame of the imaged image. Further, for example, the same subject at different point-in-time is displayed in the strip-of-paper image T(1)-1 and strip-of-paper image T(2)-1.

Accordingly, the same subject at different point-in-time is displayed in the panorama image W(1) and panorama image W(2). Also, one frame of panorama moving image is generated by strip-of-paper images obtained from the imaged images of different multiple frames being synthesized, and accordingly, even with a single panorama image, the subject displayed in each region differs in imaged point-in-time.

Note that a subject displayed on a panorama image may be the entire region in imaging space serving as an object to be imaged (subject) at the time of imaging of N imaged images, or may be a partial region in imaging space.

Returning to description of the flowchart in Fig. 4, in the event that determination is made in step S19 that a predetermined number of frames of panorama moving image has been generated, the signal processing unit 24 reads out the panorama image of each frame making up the panorama moving image from the recording medium 29 via the drive 28. Subsequently, the signal processing unit 24 supplies the readout panorama image to the compression/decompression unit 27 to instruct decoding, and the processing proceeds to step S20.

In step S20, the compression/decompression unit 27 decodes the image data of the panorama moving image data supplied from the signal processing unit 24, i.e., each panorama image, for example, by JPEG, and supplies to the display control unit 30.

Subsequently, in step S21, the display control unit 30 supplies the panorama moving image from the compression/decompression unit 27 to the display unit 31 for display. Specifically, the display control unit 30 displays the panorama images making up the panorama moving image with a predetermined time interval in the order of frames numbers provided to the panorama images thereof.

Thus, with the display unit 31, each frame of the panorama moving image is displayed in order with a predetermined time interval. That is to say, a moving image with the entirety or a part of the region in imaging space serving as an object to be imaged at the time of imaging of the N imaged images as a subject is displayed. The panorama image itself making up each frame of the panorama moving image that is displayed in this way is a still image, but the region of the same space is taken as a subject, each subject to be displayed in each region of the panorama moving image has motion. Upon the panorama moving image being displayed, the panorama moving image generation processing ends.

In this way, the imaging apparatus 11 generates multiple strip-of-paper images from each of multiple imaged images imaged at different point-in-time while shifting the trimming region, synthesizes the strip-of-paper images to generate a panorama image making up each frame of the panorama moving image.

According to the panorama moving image generated in this way, an imaged subject can have motion and the motion thereof can be expressed, and accordingly, the image of the imaged subject can be displayed in a more effective manner. Moreover, the subject in each region on a single panorama image has different point-in-time, and accordingly, a more interesting image can be presented. That is to say, an imaged subject can be displayed in a more effective manner.

Note that description has been made so far wherein the N imaged images are imaged, all of the imaged images are temporarily recorded in the buffer memory 26, and then these imaged images are used to generate a panorama moving image, but generation of a panorama moving image may be performed while performing imaging of imaged images at the same time. Also, an arrangement may be made wherein a function for generating a panorama moving image from imaged images is provided to a device such as a personal computer, and a panorama moving image is generated from imaged images imaged by a camera.

### Second Embodiment

### Configuration of Signal Processing Unit

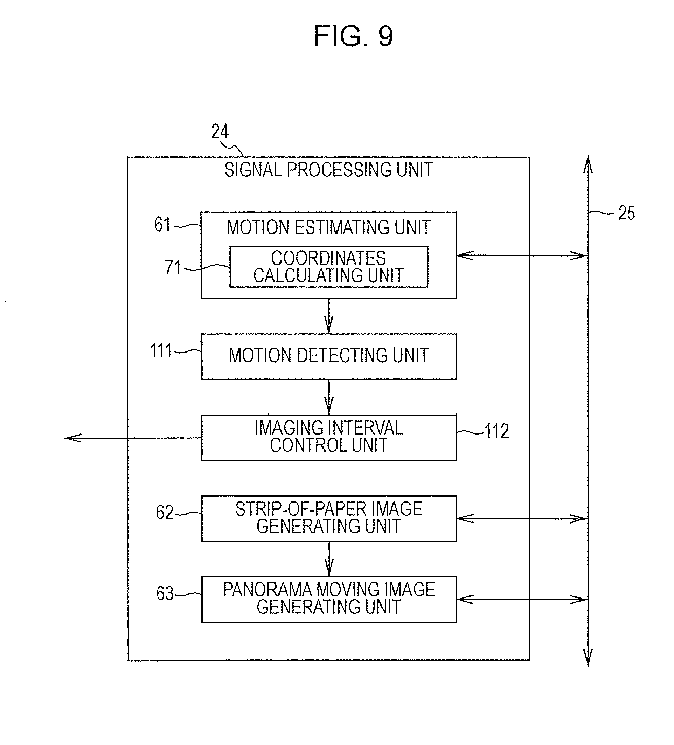

Further, in the event of generating a panorama moving image, an arrangement may be made wherein motion is detected from imaged images, the imaging interval of the imaged images, i.e., the frame rate of the imaged images is controlled according to the detection results thereof. In such a case, the signal processing unit 24 is configured as illustrated in Fig. 9. Note that, in Fig. 9, portions corresponding to the case in Fig. 2 are denoted with the same reference numeral, and description thereof will be omitted as appropriate.

With the signal processing unit 24 in Fig. 9, a motion detecting unit 111 and an imaging interval control unit 112 are newly provided. Subsequently, the center coordinates of imaged images obtained at the motion estimating unit 61 and the imaged images are supplied from the motion estimating unit 61 to the motion detecting unit 111.

In the event that the imaged images of continuous two frames are arrayed on the x-y coordinates system based on the imaged images and center coordinates from the motion estimating unit 61, the motion detecting unit 111 detects motion from the imaged images by obtaining difference of mutually overlapped portions, and supplies the detection results to the imaging interval control unit 112.

The imaging interval control unit 112 causes the imaging control unit 23 to control the imaging interval of imaged images based on the detection results from the motion detecting unit 111.

### Description of Panorama Moving Image Generation Processing

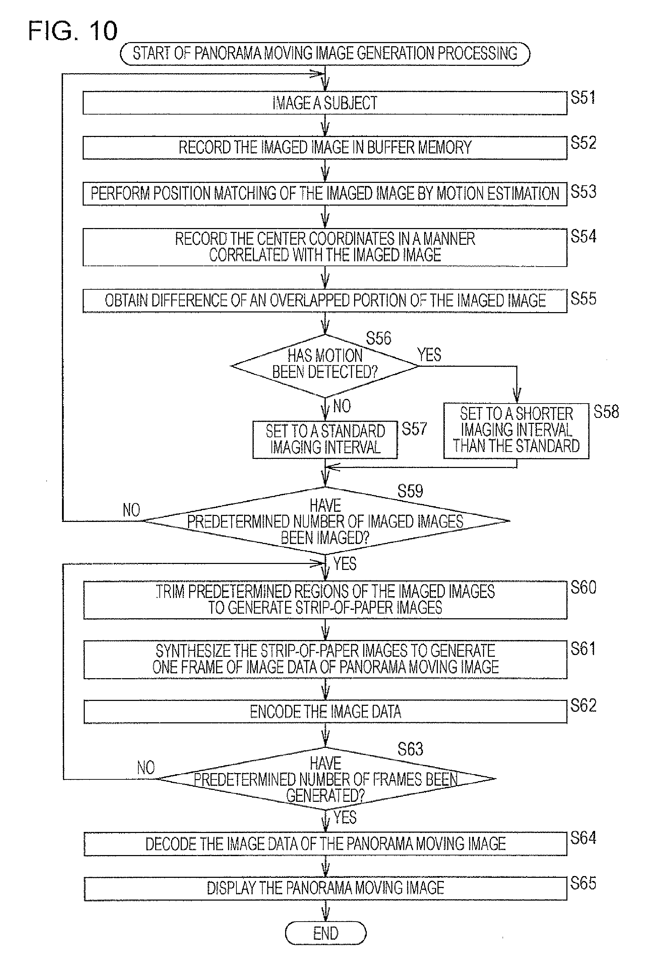

Next, description will be made regarding panorama moving image generation processing in the case of the signal processing unit 24 is configured as illustrated in Fig. 9, with reference to the flowchart in Fig. 10. Note that step S51 through step S54 are the same as step S11 through step S14 in Fig. 4 respectively, and accordingly, description thereof will be omitted.

In step S53, the motion estimating unit 61 performs position matching between the imaged image P(n) and imaged image P(n-1) of continuous two frames to obtain the center coordinates of the imaged image P(n). Then, the motion estimation unit 61 supplies the imaged image P(n) and imaged image P(n-1), and the center coordinates of these imaged images to the motion detecting unit 111.

In step S55, the motion detecting unit 111 obtains difference of respective pixels of an overlapped portion of the imaged image P(n) and imaged image P(n-1), obtains a total value of the absolute values of differences of the respective pixel thereof, supplies to the imaging interval control unit 112.

Specifically, the motion detecting unit 111 arrays, based on the center coordinates of the imaged image P(n) and imaged image P(n-1), these imaged images on the x-y coordinates system, and takes a mutually overlapped region of these imaged images as an object to be processed. The motion detecting unit 111 obtains difference of the pixel values of overlapped pixels of the imaged image P(n) and imaged image P(n-1) for all pixels within the regions of the imaged image P(n) and imaged image P(n-1) to be processed, and obtains a total value of the absolute value of difference for each pixel.

In step S56, the imaging interval control unit 112 determines, based on the total value from the motion detecting unit 111, whether or not motion has been detected in the imaged image.

For example, in the event that the total value of the absolute values of differences is equal to or greater than a predetermined threshold, determination is made that motion has been detected in the imaged image P(n).

In the event that an overlapped portion between the imaged image P(n) and imaged image P(n-1) includes a subject with motion, a position where the subject thereof is displayed differs due to frames, and accordingly, the total value of the absolute values of differences ought to be greater. Therefore, with the imaging interval control unit 112, in the event that the total value is equal to or greater than the threshold, determination is made that a subject with motion has been detected.

In the event that determination is made in step S56 that no motion has been detected, in step S57 the imaging interval control unit 112 takes the imaging interval of imaged images by the imaging unit 22 as a predetermined standard imaging interval. Subsequently, the imaging interval control unit 112 causes the imaging control unit 23 to perform control of imaging of imaged images with the determined standard imaging interval, and then the processing proceeds to step S59.

On the other hand, in the event that determination is made in step S56 that motion has been detected, in step S58 the imaging interval control unit 112 takes the imaging interval of imaged images by the imaging unit 22 as a shorter imaging interval than a predetermined standard imaging interval. Subsequently, the imaging interval control unit 112 causes the imaging control unit 23 to perform control of imaging of imaged images with the determined shorter imaging interval, and then the processing proceeds to step S59.

Upon the imaging interval being determined in step S57 or step S58, processing in step S59 through step S65 is performed, and the panorama moving image generation processing ends. Note that these processes are the same processes in step S15 through step S21 in Fig. 4, and accordingly, description thereof will be omitted.

In this way, the imaging apparatus 11 detects motion from an imaged image, and controls a time interval for imaging the imaged image according to the detection result thereof. Specifically, with the imaging apparatus 11, in the event that no motion has been detected from an imaged image, imaging of the imaged image is performed with a standard imaging interval, and in the event that motion has been detected, imaging of the imaged image is performed with a shorter imaging interval than the standard. Subsequently, upon returning from a state in which motion has been detected to a state in which no motion has been detected again, the imaging interval of an imaged image returns to the standard imaging interval.

In the event that motion has been detected, the imaged image is imaged with a shorter time interval than the normal time interval, and accordingly, at the time of a subject with motion being displayed on a panorama moving image, the motion amount of the subject between frames can be further reduced. That is to say, the frame rate of the panorama moving image can essentially be increased.

Thus, the motion of a subject can further be smoothed on the panorama moving image, and the quality of the panorama moving image can be improved. Moreover, in the event that no motion has been detected, the imaged image is imaged with the normal imaging interval, and accordingly, increase in the processing amount can be prevented without increasing the number of imaged images.

### Third Embodiment

### Configuration of Signal Processing Unit

Incidentally, at the time of imaging of an imaged image, imaging is performed so that imaged images of continuous frames have a mutually sufficient overlap, i.e., the number of portions including the same subject is great, and an overlapped portion is sufficiently great in the event of arraying the imaged images on the x-y coordinates system.

Therefore, in the event that a subject with motion is not included in an imaged image, some of multiple imaged images continuously imaged may be used for generation of a panorama moving image. Thus, the processing amount at the time of generation of a panorama moving image can be reduced.

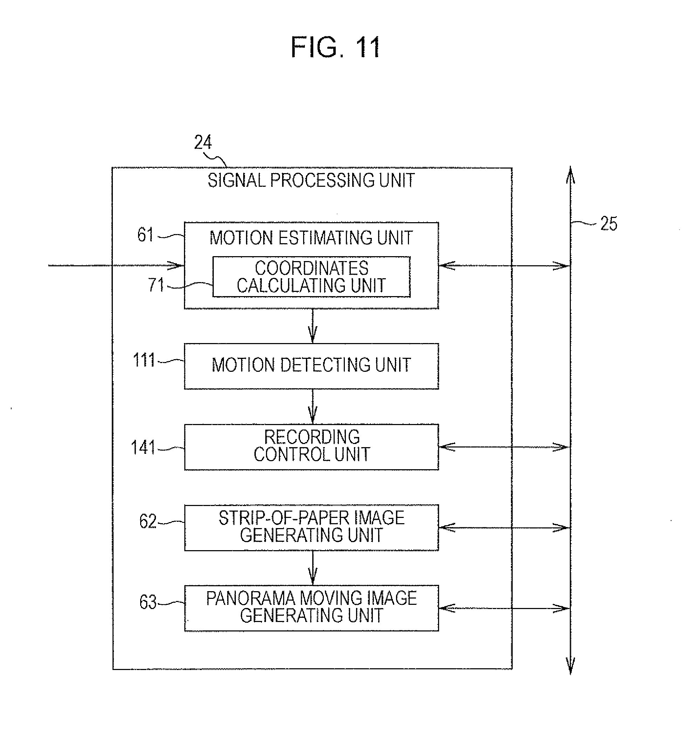

In the event that an unnecessary imaged image is not used for generation of a panorama moving image, for example, the signal processing unit 24 is configured as illustrated in Fig. 11. Note that, in Fig. 11, portions corresponding to the case in Fig. 9 are denoted with the same reference numerals, and description thereof will be omitted as appropriate.

With the signal processing unit 24 in Fig. 11, instead of the imaging interval control unit 112 in Fig. 9, a recording control unit 141 is newly provided. Subsequently, the imaged image imaged by the imaging unit 22 is supplied to the motion estimating unit 61 via the imaging control unit 23.

Also, the motion detecting unit 111 receives supply of the imaged image and center coordinates from the motion detecting unit 61, detects motion from the imaged image, and also supplies the detection result thereof, imaged image, and center coordinates to the recording control unit 141. The recording control unit 141 controls recording of the imaged image and center coordinates to the buffer memory 26 according to the detection result from the motion detecting unit 111.

### Description of Panorama Moving Image Generation Processing

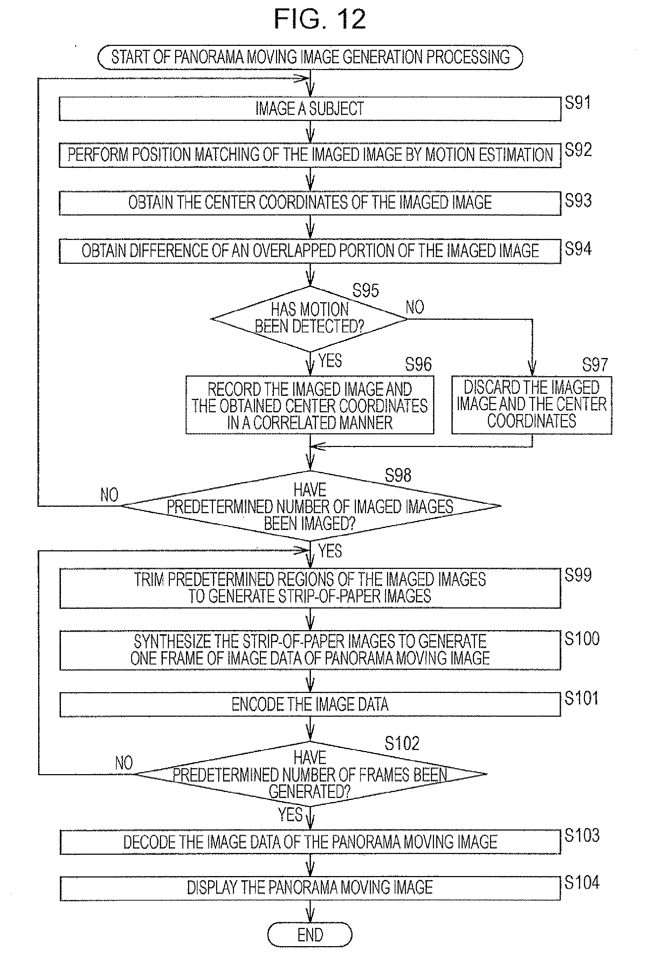

Next, description will be made regarding panorama moving image generation processing in the event that the signal processing unit 24 is configured as illustrated in Fig. 11, with reference to the flowchart in Fig. 12.

Note that processing in step S91 is the same as the processing in step S11 in Fig. 4, and accordingly, description thereof will be omitted. The imaged image imaged by the imaging unit 22 is supplied to the motion estimating unit 61 of the signal processing unit 24 via the imaging control unit 23.

In step S92, the motion estimating unit 61 obtains the imaged image and center coordinates of the immediately previous frame from the buffer memory 26, and performs position matching of the imaged images by motion estimation. Subsequently, in the step S93, the coordinates calculating unit 71 obtains the center coordinates of the imaged image of the imaged current frame based on the results of the position matching by motion estimation.

With the position matching by motion estimation, and calculation of center coordinates in step S92 and step S93, the same processing as the processing in step S13 in Fig. 4 is performed.

Upon the center coordinates of the imaged image of the current frame being obtained, the motion estimating unit 61 supplies the imaged images and center coordinates of the current frame and the frame immediately before the current frame to the motion detecting unit 111.

In step S94, the motion detecting unit 111 obtains, based on the imaged images and center coordinates from the motion estimating unit 61, difference of each pixel of the overlapped portion of these imaged images, and obtains a total value of the absolute value of difference of each pixel thereof. Subsequently, the motion detecting unit 111 supplies the total value of the absolute values of differences, and the imaged image and center coordinates of the current frame to the recording control unit 141.

Note that calculation of the total value performed in step S94 is the same as the processing in step S55 in Fig. 10, and accordingly, detailed description thereof will be omitted.

In step S95, the recording control unit 141 determines, based on the total value from the motion detecting unit 111, whether or not motion has been detected in the imaged image. For example, in the event that the total value of the absolute values of differences is equal to or greater than a predetermined threshold, determination is made that motion has been detected.

In the event that determination is made in step S95 that motion has been detected, the recording control unit 141 supplies the imaged image and center coordinates of the current frame, supplied from the motion detecting unit 111, to the buffer memory 26 via the bus 25, and proceeds to step S96.

In step S96, the buffer memory 26 records the imaged image and center coordinates of the current frame supplied from the recording control unit 141 in a correlated manner. At this time, the recording control unit 141 records the imaged image by providing a frame number thereto.

For example, in the event that a frame number (n-1) is provided to a frame immediately before the current frame recorded in the buffer memory 26, i.e., a frame having the maximum frame number, "n" is provided as the frame number of the current frame. Subsequently, upon the imaged image and center coordinates being recorded, the processing proceeds to step S98.

On the other hand, in the event that determination is made in step S95 that no motion has been detected, in step S97 the recording control unit 141 discards the imaged image and center coordinates of the current frame supplied from the motion detecting unit 111. Subsequently, upon the imaged image and center coordinates being discarded, the processing proceeds to step S98.

Upon the imaged image being recorded or discarded in step S96 or step S97, processing in step S98 through step S104 is performed, and the panorama moving image generation processing ends. Note that these processes are the same as the processes in step S15 through step S21 in Fig. 4, so description thereof will be omitted.

Note that, as a result of the position matching, at the time of the imaged images of the current frame and the immediately previous frame on the x-y coordinates system, in the event that the area of the overlapped portion of the imaged images is equal to or smaller than a predetermined size, the imaged image and center coordinates of the current frame may be recorded regardless of the motion detected result. Thus, at the time of arraying the respective imaged images on the x-y coordinates system, the adjacent imaged images are not mutually overlapped, and the image of a particular region on the imaging space can be prevented from being missing.

In this way, the imaging apparatus 11 detects motion from the imaged image, and controls recording of the imaged image and center coordinates according to the detection result thereof. In the event that not motion has been detected, the imaged image and center coordinates are discarded, and are not used for generation of a panorama moving image, whereby the recoding capacity of the buffer memory 26 necessary for transient recording of the imaged image can be reduced, and also the processing amount can be reduced.

### Fourth Embodiment

### Description of Imaging Method of Imaged Image

Note that description has been made so far wherein image of the imaged image is instructed while the user moves the imaging apparatus 11, imaging of the imaged image may be performed in a state in which the imaging apparatus 11 is moved by a device.

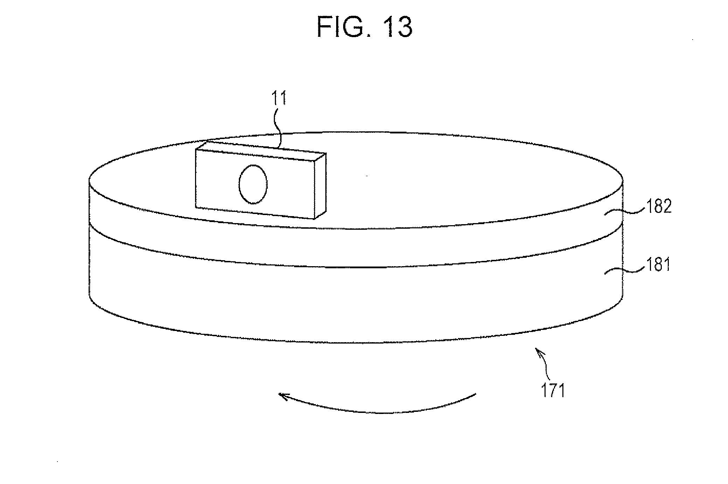

In such a case, for example, as illustrated in Fig. 13, the imaging apparatus 11 is fixed onto a turntable 171, and turns. Specifically, the turntable 171 is configured of a fixing unit 181 disposed on a predetermined table or the like, and a turntable 182 which turns as to the fixing unit 181.

With the example in Fig. 13, the imaging apparatus 11 is fixed onto the turntable 182, and the turntable 182 turns at predetermined turning speed in an arrow direction in the drawing, whereby the imaging apparatus 11 becomes a state moving as to a subject to be imaged.

### Configuration of Signal Processing Unit

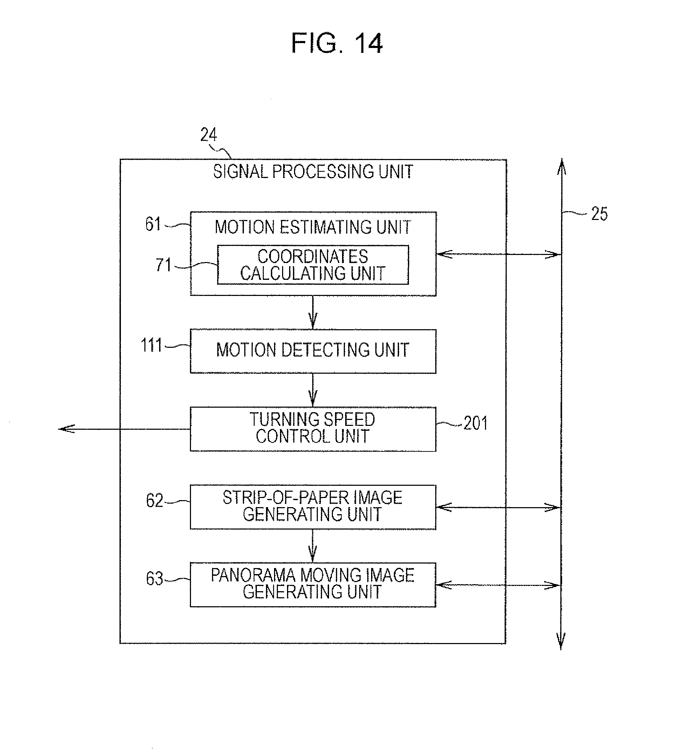

In this way, in the event of turning the imaging apparatus 11 by the turntable 171, for example, the signal processing unit 24 of the imaging apparatus 11 is configured as illustrated in Fig. 14, and the signal processing unit 24 and the turntable 171 are electrically connected.

Note that, in Fig. 14, portions corresponding to the case in Fig. 9 are denoted with the same reference numerals, and description thereof will be omitted as appropriate.

With the signal processing unit 24 in Fig. 14, a turning speed control unit 201 is newly provided instead of the imaging interval control unit 112 in Fig. 9. The turning speed control unit 201 controls the turning speed of the turntable 171 according to the motion detection result from the motion detecting unit 111.

### Description of Panorama Moving Image Generation Processing

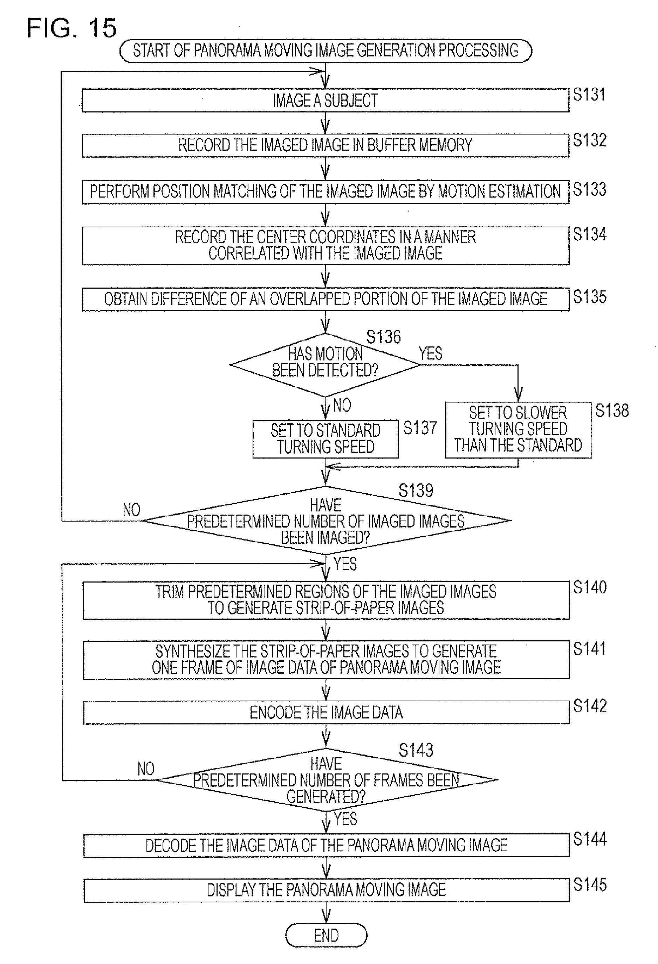

Next, description will be made regarding panorama moving image generation processing in the event that the signal processing unit 24 is configured as illustrated in Fig. 14, with reference to the flowchart in Fig. 15.

Note that processing in step S131 through step S135 is the same as the processing in step S51 through step S55 in Fig. 10, and accordingly, description thereof will be omitted. Upon motion being detected by the motion detecting unit 111, the total value of the absolute values of differences of the imaged images of continuous frames is supplied from the motion detecting unit 111 to the turning speed control unit 201 as the detection result thereof.

In step S136, the turning speed control unit 201 determines, based on the total value from the motion detecting unit 111, whether or not motion has been detected in the imaged image. For example, in the event that the total value of the absolute values of differences is equal to or greater than a predetermined threshold, determination is made that motion has been detected in the imaged image.

In the event that determination is made in step S136 that no motion has been detected, in step S137 the turning speed control unit 201 sets the turning speed of the turntable 171 to predetermined standard turning speed. Subsequently, the turning speed control unit 201 controls the turntable 171 to turn the turntable 171 at the determined standard turning speed, and then the processing proceeds to step S139.

On the other hand, in the event that determination is made in step S136 that motion has been detected, in step S138 the turning speed control unit 201 sets the turning speed of the turntable 171 to turning speed slower than predetermined standard turning speed. Subsequently, the turning speed control unit 201 controls the turntable 171 to turn the turntable 171 at the turning speed slower than the determined standard turning speed, and then the processing proceeds to step S139.

Upon the turning speed being determined in step S137 or step S138, processing in step S139 through step S145 is performed, and the panorama moving image generation processing ends. Note that these processes are the same as the processes in step S15 through step S21 in Fig. 4, and accordingly, description thereof will be omitted.

In this way, the imaging apparatus 11 detects motion from an imaged image, and controls the turning speed of the turntable 171 according to the detection result thereof. Specifically, in the event that no motion has been detected from the imaged image, the imaging apparatus 11 turns the turntable 171 at the standard turning speed, and upon detecting motion, turns the turntable 171 at turning speed slower than the standard. Subsequently, upon returning to a state in which no motion has been detected again from a state in which motion has been detected, the turning speed of the turntable 171 is returned to the standard turning speed.

In the event that motion has been detected, the imaging apparatus 11 is turned at slower turning speed, whereby the frame rate of a panorama moving image can essentially be increased. Thus, the motion of a subject on the panorama moving image can further be smoothed, and the quality of the panorama moving image can be improved.

### Fifth Embodiment

### Description of Disparity and Stereoscopic Panorama Moving Image

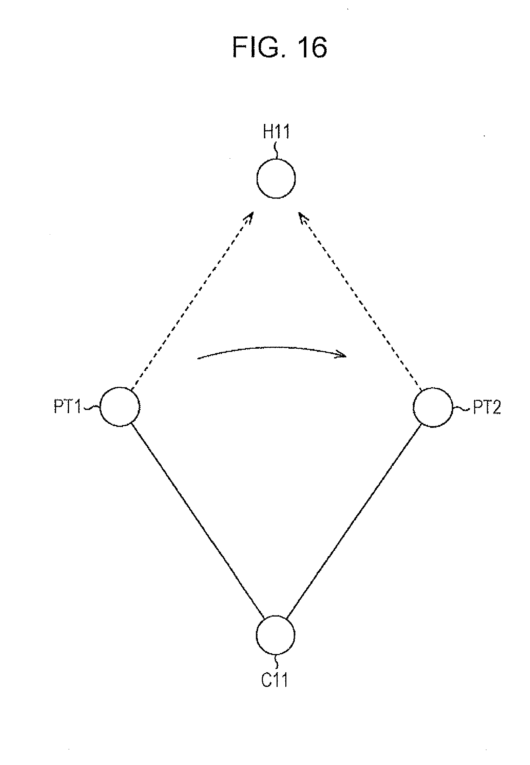

Incidentally, as illustrated in Fig. 16, when imaging an imaged image while turning the imaging apparatus 11 in an arrow direction in the drawing with a turning center C11 as the center, let us say that an imaged image was imaged at a position PT1 and a position PT2.

In this case, the imaged image imaged at the time of the imaging apparatus 11 being positioned in each of the position PT1 and position PT2 includes the same subject H11, but the imaged positions of these imaged images, i.e., the observed positions of the subject H11 differ, and accordingly, disparity is caused. In the event that the imaging apparatus 11 turns at fixed turning speed, the longer distance from the turning center C11 to the imaging apparatus 11 is, e.g., the longer distance from the turning center C11 to the position PT1 is, the greater disparity is.

In the event that the disparity thus caused is used to generate two panorama moving images of which the observed positions differ (having disparity), and these panorama moving images are played at the same time, a stereoscopic panorama moving image can be provided to the user.

Note that, hereafter, of the two panorama moving images of which the observed positions differ, the panorama moving image to be displayed so as to be observed by the right eye of the user will be referred to as a panorama moving image for the right eye, and the panorama moving image to be displayed so as to be observed by the left eye of the user will be referred to as a panorama moving image for the left eye. Also, a set of the two panorama moving images for the right eye and for the left eye will be referred to as a stereoscopic panorama moving image.

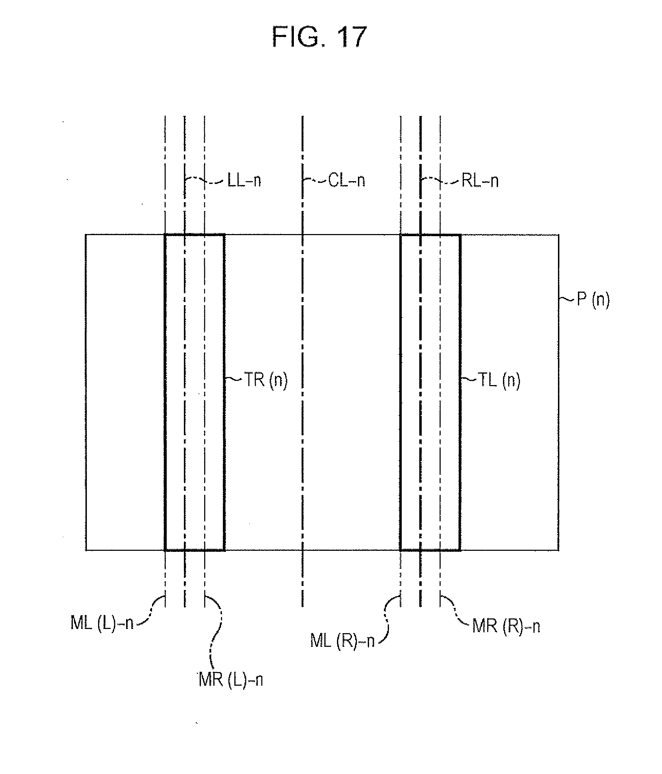

In the event of generating a stereoscopic panorama moving image, a strip-of-paper image used for generation of a panorama moving image is trimmed regarding each for the right eye and for the left eye from the imaged image. Now, calling each strip-of-paper image, used for generation of panorama image for the right eye and for the left eye, a strip-of-paper image for the right eye, and a strip-of-paper image for the left eye, these strip-of-paper images are trimmed from a region determined by a predetermined reference position on the imaged image as illustrated in Fig. 17.

Note that in Fig. 17, portions corresponding to the case in Fig. 5 are denoted with the same reference numerals, and description thereof will be omitted as appropriate.

In Fig. 17, a boundary ML(L)-n and a boundary MR(L)-n that are straight lines in the vertical direction are straight lines in the vicinity of a boundary LL-n on the imaged image P(n), and are disposed apart to the left side and the right side of the boundary LL-n by predetermined distance, in the drawing, respectively. Similarly, in the drawing, a boundary ML(R)-n and a boundary MR(R)-n that are straight lines in the vertical direction are straight lines in the vicinity of a boundary RL-n on the imaged image P(n), and are disposed apart to the left side and the right side of the boundary RL-n by predetermined distance, respectively.

These boundary ML(L)-n and boundary ML(R)-n, and boundary MR(L)-n and boundary MR(R)-n are boundaries corresponding to the boundary ML(C)-n and boundary MR(C)-n in Fig. 7, respectively.

For example, in the event that strip-of-paper images used for generation of the panorama moving images of the first frame for the right eye and for the left eye are timed from the imaged image P(n), in the drawing of the boundary CL-n on the imaged image P(n), the boundary LL-n and boundary RL-n positioned to the left and right are taken as references.

That is to say, regions determined with the boundary LL-n and boundary RL-n on the imaged image P(n) as references are trimmed as a strip-of-paper image TR(n) for the right eye, and a strip-of-paper image TL(n) for the left eye, respectively.

In more detail, the region taken as the strip-of-paper image TR(n) for the right eye is a region between the positions from the boundary ML(L)-n to the boundary MR(L)-(n+1) on the imaged image P(n).

Here, the boundary MR(L)-(n+1) is, on the imaged image P(n+1), a boundary corresponding to the boundary MR(L)-n positioned in the same position as the boundary MR(L)-n on the imaged image P(n). Also, the position of the boundary MR(L)-(n+1) on the imaged image P(n) is a position on the imaged image P(n) overlapped with the boundary MR(L)-(n+1) of the imaged image P(n+1) in the event of arraying the imaged image P(n) and imaged image P(n+1) on the x-y coordinates system based on the center coordinates.

Similarly, the region taken as the strip-of-paper image TL(n) for the left eye is a region between the positions from the boundary ML(R)-n to the boundary MR(R)-(n+1) on the imaged image P(n). Here, the boundary MR(R)-(n+1) is a boundary on the imaged image P(n+1) corresponding to the boundary MR(R)-n. Also, the position of the boundary MR(R)-(n+1) on the imaged image P(n) is a position on the imaged image P(n) overlapped with the boundary MR(R)-(n+1) of the imaged image P(n+1) in the event of arraying the imaged image P(n) and imaged image P(n+1) on the x-y coordinates system.

Further, not only the strip-of-paper images used for generation of the panorama moving images of the first frame for the right eye and for the left eye but also strip-of-paper images for generation of the subsequent frames are also timed from each imaged image.

For example, let us say that the strip-of-paper image TR(n) of the m'th frame of the panorama moving image for the right eye is taken as a strip-of-paper image TR(n)-m, and distance from the boundary LL-n to the boundary LL-(n+1) when arraying the imaged image P(n) and imaged image P(n+1) on the x-y coordinates system is taken as LW. Note that the boundary LL-(n+1) is a boundary on the imaged image P(n+1) corresponding to the boundary LL-n on the imaged image P(n).

In this case, the trimming position of the strip-of-paper image TR(n)-m of the m'th frame is taken as a position shifted from the trimming position of the strip-of-paper image TR(n) of the first frame to the left side by distance of (m-1) times of the distance LW in Fig. 17.

Similarly, let us say that the strip-of-paper image TL(n) of the m' th frame of the panorama moving image for the left eye is taken as a strip-of-paper image TL(n)-m, and distance from the boundary RL-n to the boundary RL-(n+1) when arraying the imaged image P(n) and imaged image P(n+1) on the x-y coordinates system is taken as RW. Note that the boundary RL-(n+1) is a boundary on the imaged image P(n+1) corresponding to the boundary RL-n on the imaged image P(n).

In this case, the trimming position of the strip-of-paper image TL(n)-m of the m'th frame is taken as a position shifted from the trimming position of the strip-of-paper image TL(n) of the first frame to the left side by distance of (m-1) times of the distance RW in Fig. 17.

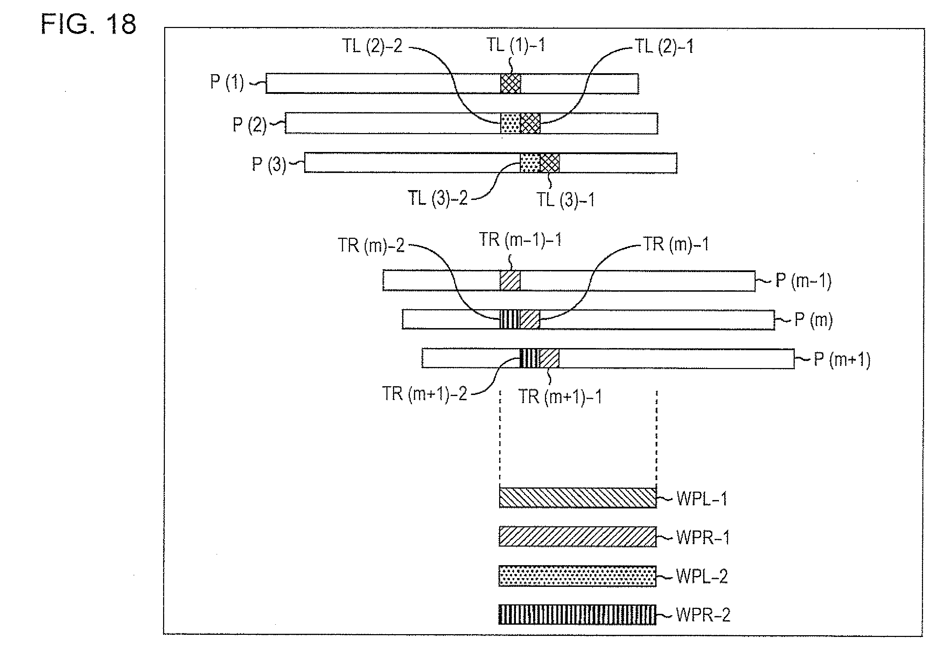

In this way, upon generating the image data of each frame of a panorama moving image while shifting the trimming position of a strip-of-paper image for each frame, a stereoscopic panorama moving image as illustrated in Fig. 18 is obtained, for example. Note that, in Fig. 18, the horizontal direction in the drawing corresponds to the horizontal direction in Fig. 17. For example, the horizontal direction in Fig. 18 corresponds to the x direction of the x-y coordinates system.

With the example in Fig. 18, a panorama image WPL-1 making up the first frame of a panorama moving image for the left eye is generated from a strip-of-paper image TL(1)-1 through a strip-of-paper image TL(3)-1 or the like trimmed from the imaged image of each frame. Also, a panorama image WPL-2 making up the second frame of the panorama moving image for the left eye is generated from a strip-of-paper image TL(2)-2, strip-of-paper image TL(3)-2, or the like trimmed from a position shifted to the left from those strip-of-paper images.

Similarly, a panorama image WPR-1 making up the first frame of a panorama moving image for the right eye is generated from a strip-of-paper image TR(m-1)-1 through a strip-of-paper image TR(m+1)-1 or the like trimmed from the imaged image. Also, a panorama image WPR-2 making up the second frame of the panorama moving image for the right eye is generated from a strip-of-paper image TR(m)-2, strip-of-paper image TR(m+1)-2, or the like trimmed from a position shifted to the left from those strip-of-paper images.

### Configuration of Imaging Apparatus

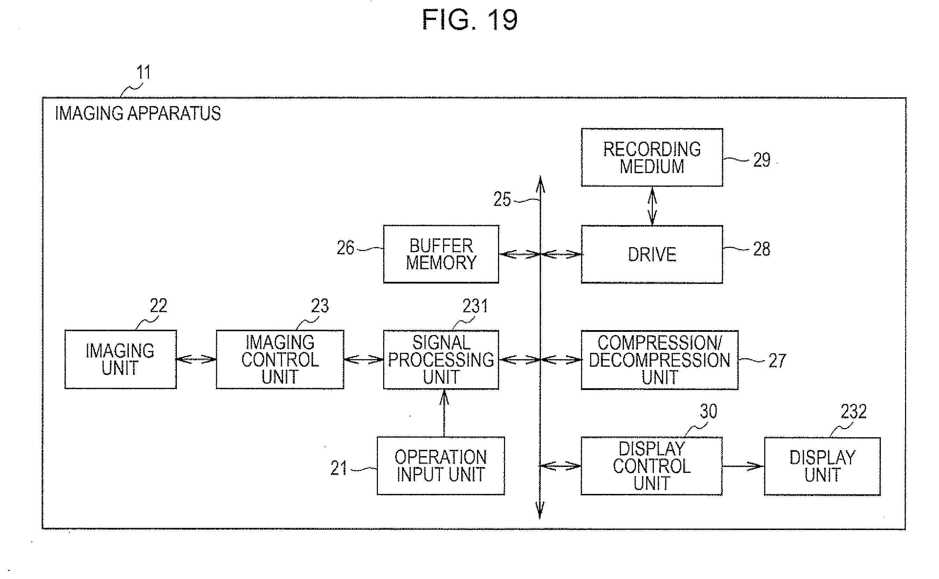

In this way, the imaging apparatus 11 for generating a stereoscopic panorama moving image made up of panorama moving images for the right eye and for the left eye is configured as illustrated in Fig. 19, for example. Note that, in Fig. 19, portions corresponding to the case in Fig. 1 are denoted with the same reference numerals, and description thereof will be omitted as appropriate.

With the imaging apparatus 11 in Fig. 19, instead of the signal processing unit 24 and display unit 31 in Fig. 1, a signal processing unit 231 and a display unit 232 are newly provided.

The signal processing unit 231 controls the entirety of the imaging apparatus 11, and reads out an imaged image from the buffer memory 26 to generate a stereoscopic panorama moving image, for example. The display unit 232 is made up of, for example, an LCD or lenticular lens, and displays a stereoscopic image by the lenticular system.

### Configuration of Signal Processing Unit

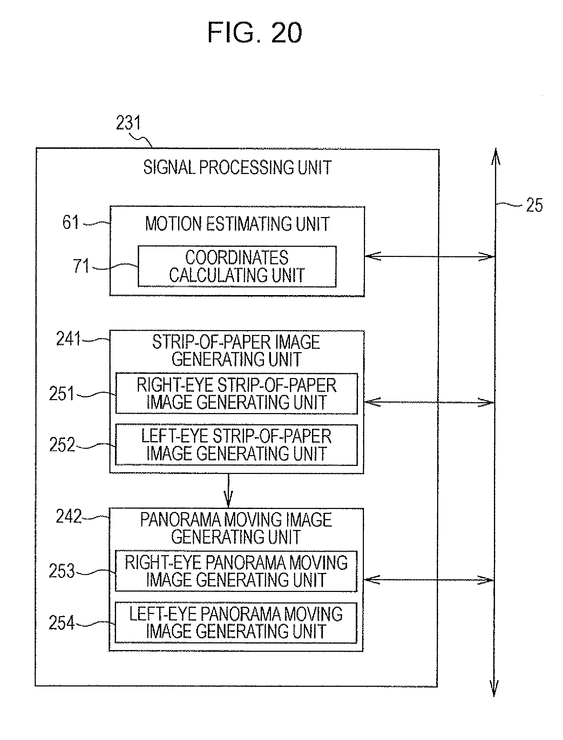

Also, the signal processing unit 231 in Fig. 19 is configured in more detail as illustrated in Fig. 20. Note that, in Fig. 20, portions corresponding to the case in Fig. 2 are denoted with the same reference numerals, and accordingly, description thereof will be omitted as appropriate.

The strip-of-paper image generating unit 241 uses the imaged image and center coordinates supplied via the bus 25 to trim a predetermined region on the imaged image as a strip-of-paper image, and supplies to the panorama moving image generating unit 242. With the strip-of-paper image generating unit 241, a right-eye strip-of-paper image generating unit 251 for generating a strip-of-paper image for the right eye, and a left-eye strip-of-paper image generating unit 252 for generating a strip-of-paper image for the left eye are provided.

The panorama moving image generating unit 242 synthesizes the strip-of-paper images from the strip-of-paper image generating unit 241 to generate a panorama moving image. With the panorama moving image generating unit 242, a right-eye panorama moving image generating unit 253 for generating a panorama moving image for the right eye from strip-of-paper images for the right eye, and a left-eye panorama moving image generating unit 254 for generating a panorama moving image for the left eye from strip-of-paper images for the left eye are provided.

### Description of Stereoscopic Panorama Moving Image Generation Processing

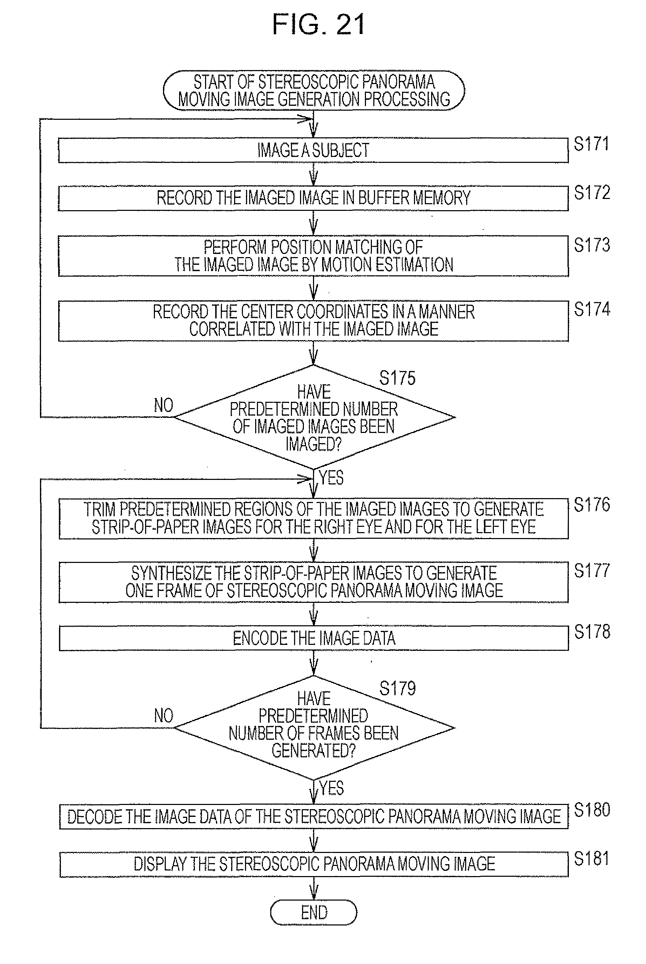

Next, description will be made regarding stereoscopic panorama moving image generation processing that the imaging apparatus 11 in Fig. 19 performs, with reference to the flowchart in Fig. 21.

Note that processing in steps S171 through step S175 is the same as the processing in step S11 through step S15 in Fig. 4, and accordingly, description thereof will be omitted. Specifically, the imaged image and center coordinates obtained by imaging are recorded in the buffer memory 26.

In step S176, the right-eye strip-of-paper image generating unit 251 and left-eye strip-of-paper image generating unit 252 obtain the N imaged images and center coordinates thereof from the buffer memory 26, and generate strip-of-paper images for the right eye and for the left eye based on the obtained imaged images and center coordinates.

Specifically, the same processing as the processing in step S16 in Fig. 4 is performed, and strip-of-paper images for the right eye and for the left eye are generated. Note that the trimming positions of strip-of-paper images are shifted to the left direction by predetermined distance for each frame in Fig. 17 as described with reference to Fig. 17. For example, in the event of strip-of-paper images used for generation of the panorama moving image of the first frame, a strip-of-paper image TR(n) for the right eye, and a strip-of-paper image TL(n) for the left eye are trimmed from the imaged image P(n).

Upon generating strip-of-paper images from each imaged image, the right-eye strip-of-paper image generating unit 251 and left-eye strip-of-paper image generating unit 252 supply the obtained strip-of-paper images and the center coordinates of each imaged image to the panorama moving image generating unit 242.

In step S177, the right-eye panorama moving image generating unit 253 and left-eye panorama moving image generating unit 254 synthesizes, based on the strip-of-paper images and center coordinates supplied from the strip-of-paper image generating unit 241, the strip-of-paper images of each frame to generate one frame of stereoscopic panorama moving image.

Specifically, the right-eye panorama moving image generating unit 253 performs the same processing as the processing in step S17 in Fig. 4 to array and synthesize the respective strip-of-paper images for the right eye and to generate the image data of one frame of panorama moving image for the right eye. At this time, in the same way as with the case of the processing in step S17, with regard to a region from the boundary ML(L)-n to the boundary MR(L)-n in the strip-of-paper image TR(n) for the right eye, the pixel value of a pixel of the panorama image is obtained by addition with weight as to the region of the edge portion of the strip-of-paper image TR(n-1).

Also, the left-eye panorama moving image generating unit 254 performs the same processing as the processing in step S17 in Fig. 4 to array and synthesize the respective strip-of-paper images for the left eye and to generate the image data of one frame of panorama moving image for the left eye. At this time, in the same way as with the case of the processing in step S17, with regard to a region from the boundary ML(R)-n to the boundary MR(R)-n in the strip-of-paper image TL(n) for the left eye, the pixel value of a pixel of the panorama image is obtained by addition with weight as to the region of the edge portion of the strip-of-paper image TL(n-1).

In this way, upon one frame of stereoscopic panorama moving image made up of the image data of panorama moving images for the right eye and for the left eye being generated, the data of these panorama moving images is supplied from the panorama moving image generating unit 242 to the compression/decompression unit 27.

Subsequently, processing in step S178 through step S180 is performed, but this processing is the same as the processing in step S18 through step S20 in Fig. 4, and accordingly, description thereof will be omitted. Note that the panorama moving image decoded in step S180 is supplied from the compression/decompression unit 27 to the display control unit 30.

In step S181, the display control unit 30 supplies the panorama moving images for the right eye and for the left eye of each frame from the compression/decompression unit 27 in order with a predetermined time interval to the display unit 232 by the lenticular system, and displays the stereoscopic panorama moving image.

Specifically, the display unit 232 divides the panorama moving image for the right eye and for the left eye of each frame into several strip-of-paper shaped images, and alternately arrays and displays the divided images for the right eye and for the left eye in a predetermined direction, thereby displaying the stereoscopic panorama moving image. The light of the panorama moving image for the right eye, and the light of the panorama moving image for the left eye thus divided and displayed are guided to the right eye and left eye of the user who views the display unit 232 by a lenticular lens making up the display unit 232, and the image is formed, respectively. Thus, the stereoscopic panorama moving image is observed by the user's eyes.

Upon the stereoscopic panorama moving image being displayed (reproduced) on the display unit 232, the stereoscopic panorama moving image generation processing ends.

In this way, the imaging apparatus 11 generates multiple strip-of-paper images for the right eye and for the left eye while shifting the trimming region from each of the multiple imaged images imaged at different point-in-time, and synthesizes the strip-of-paper images to generate the stereoscopic panorama moving image for each frame.

According to the stereoscopic panorama moving image thus generated, the imaged subject can have motion, the motion thereof can be expressed, and further, the subject can be displayed in a stereoscopic manner, the image of the imaged subject can be displayed in a more effective manner.

The above series of processing may be performed by hardware, and may be performed by software. In the event of performing the series of processing by software, a program making up the software thereof is installed into a computer built into dedicated hardware, or a general-purpose personal computer capable of executing various types of functions by installing various types of programs thereinto, or the like from a program recording medium.

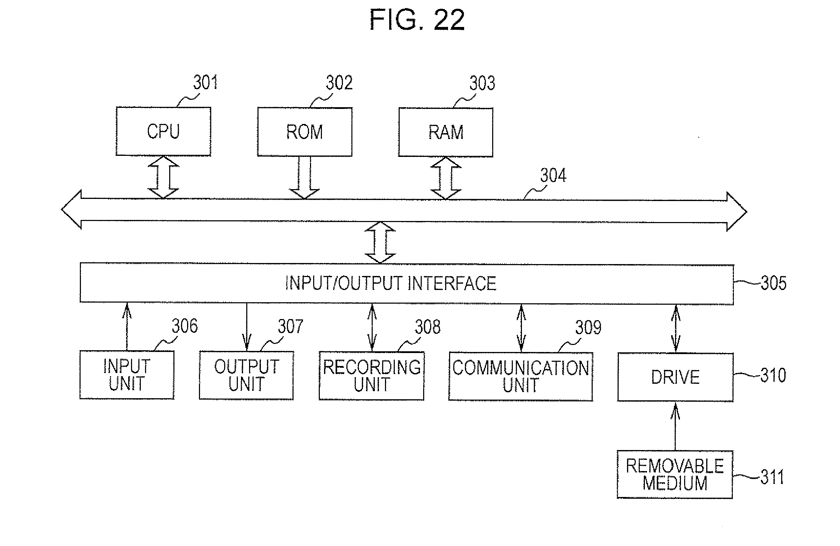

Fig. 22 is a block diagram illustrating a configuration example of the hardware of a computer which causes the program to execute the above series of processing.

With the computer, a CPU (Central Processing Unit) 301, ROM (Read Only Memory) 302, and RAM (Random Access Memory) 303 are mutually connected by a bus 304.

An input/output interface 305 is further connected to the bus 304. The input/output interface 305 is connected with an input unit 306 made up of a keyboard, a mouse, microphone, or the like, an output unit 307 made up of a display, a speaker, or the like, a recording unit 308 made up of a hard disk, nonvolatile memory, or the like, a communication unit 309 made up of a network interface or the like, and a drive 310 for driving a removable medium 311 such as a magnetic disk, optical disc, magneto-optical disk, semiconductor memory, or the like.

With the computer configured as described above, for example, the CPU 301 loads the program recorded in the recording unit 308 into the RAM 303 via the input/output interface 305 and bus 304 and executes this, whereby the above series of processing is performed.

The program that the computer (CPU 301) executes is provided by being recorded in the removable medium 311 that is a package medium made up of, for example, a magnetic disk (including a flexible disk), optical disc (CD-ROM (Compact Disc-Read Only Memory), DVD (Digital Versatile Disc), etc.), a magneto-optical disk, semiconductor memory, or the like, or via a cable or wireless transmission medium such as a local area network, the Internet, digital satellite broadcasting, or the like.

The program can be installed into the recording medium 308 via the input/output interface 305 by mounting the removable unit 311 on the drive 310. Also, the program can be received by the communication unit 309 via a cable or wireless transmission medium to be installed into the recording unit 308. Additionally, the program can be installed into the ROM 302 or recording unit 308 beforehand.

Note that the program that the computer executes may be a program to perform processing in time sequence in accordance with the order described in the present Specification, or may be a program to perform processing in parallel, or at necessary timing such as when call-up is performed, or the like.

Note that embodiments of the present invention are not restricted to the above embodiments, and various modifications may be made in a range without departing from the essence of the present invention.

### Reference Signs List

11 imaging apparatus, 22 imaging unit, 24 signal processing unit, 61 motion estimating unit, 62 strip-of-paper image generating unit, 63 panorama moving image generating unit, 71 coordinates calculating unit, 111 motion detecting unit, 112 imaging interval control unit, 141 recording control unit, 201 turning speed control unit, 231 signal processing unit, 232 display unit, 251 right-eye strip-of-paper image generating unit, 252 left-eye strip-of-paper image generating unit, 253 right-eye panorama moving image generating unit, 254 left-eye panorama moving image generating unit

## Claims

1. An image processing device comprising:
positional information generating means configured to generate, based on a plurality of imaged images imaged and obtained by imaging means while moving said imaging means, at the time of arraying a plurality of said imaged images on a predetermined plane so that the same subject included in said different imaged images is overlapped, positional information indicating the relative positional relation of each of said imaged images;
strip-of-paper image generating means configured to trim, regarding each of a plurality of said imaged images, in the event of arraying a plurality of said imaged images on a plane based on said positional information, a region on said imaged image from a predetermined reference position on said imaged image to said reference position of another imaged image arrayed in a manner overlapped with said imaged image on said plane to generate a strip-of-paper image including said region; and
panorama image generating means configured to generate a single panorama image by arraying and synthesizing each of said strip-of-paper images obtained from a plurality of said imaged images;
wherein said strip-of-paper image generating means generate, regarding a plurality of said imaged images, a plurality of said strip-of-paper images from said imaged images while shifting said region on said imaged images in a predetermined direction;
and wherein said panorama image generating means generate an image group made up of a plurality of said panorama images where the image of the same region on imaging space is displayed by generating said panorama image for each position of said region.

2. The image processing device according to Claim 1, further comprising:
display control means configured to display a plurality of said panorama images in order with a predetermined time interval.

3. The image processing device according to Claim 1, wherein said positional information generating means use a plurality of predetermined block regions on said imaged image to generate said positional information by searching for each of block corresponding regions corresponding to a plurality of said block regions out of imaged images imaged prior to said imaged image.

4. The image processing device according to Claim 3, wherein said positional information generating means detect said block region including a subject with motion based on the relative positional relations of a plurality of said block regions, and the relative positional relations of a plurality of said block corresponding regions, and in the event that said block region including said subject with motion has been detected, use, of the plurality of said block regions, said block region different from said detected block region to search for said block corresponding region, thereby generating said positional information.

5. The image processing device according to Claim 1, further comprising:
motion detecting means configured to use said imaged image and said imaged image imaged prior to said imaged image thereof to detect motion from said imaged image; and
imaging control means configured to control said imaging means so that in the event that said motion has not been detected, said imaged image is imaged with a first time interval, and in the event that said motion has been detected, said imaged image is imaged with a second time interval that is shorter than said first time interval.

6. The image processing device according to Claim 1, further comprising:
motion detecting means configured to use said imaged image and said imaged image imaged prior to said imaged image thereof to detect motion from said imaged image; and
discarding means configured to discard said imaged image from which said motion has not been detected;
wherein said discarded imaged image is not used for generation of said strip-of-paper images.

7. The image processing device according to Claim 1, further comprising:
motion detecting means configured to use said imaged image and said imaged image imaged prior to said imaged image thereof to detect motion from said imaged image; and
moving means configured to move said imaging means at speed corresponding to the detection result of said motion.

8. The image processing device according to Claim 1, wherein said strip-of-paper image generating means generate a first strip-of-paper image from said imaged image with a first position as said reference position, and also generate a second strip-of-paper image from said imaged image with a second position different from the first position as said reference position;
and wherein said panorama image generating means generate a first panorama image group and a second panorama image group that have mutually disparity based on said first strip-of-paper image and said second strip-of-paper image obtained from a plurality of said imaged images.

9. An image processing method for an image processing device including:
positional information generating means configured to generate, based on a plurality of imaged images imaged and obtained by imaging means while moving said imaging means, at the time of arraying a plurality of said imaged images on a predetermined plane so that the same subject included in said different imaged images is overlapped, positional information indicating the relative positional relation of each of said imaged images,
strip-of-paper image generating means configured to trim, regarding each of a plurality of said imaged images, in the event of arraying a plurality of said imaged images on a plane based on said positional information, a region on said imaged image from a predetermined reference position on said imaged image to said reference position of another imaged image arrayed in a manner overlapped with said imaged image on said plane to generate a strip-of-paper image including said region, and
panorama image generating means configured to generate a single panorama image by arraying and synthesizing each of said strip-of-paper images obtained from a plurality of said imaged images,
comprising the steps of:
generating, with said positional information generating means, said positional information from a plurality of said imaged images;
generating, with said strip-of-paper image generating means, regarding a plurality of said imaged images, a plurality of said strip-of-paper images from said imaged image while shifting said region on said imaged image in a predetermined direction; and
generating, with said panorama image generating means, said panorama image for each position of said region, thereby generating an image group made up of a plurality of said panorama images where the image of the same region on imaging space is displayed.

10. A program causing computer to execute processing including:
a positional information generating step arranged to generate, based on a plurality of imaged images imaged and obtained by imaging means while moving said imaging means, at the time of arraying a plurality of said imaged images on a predetermined plane so that the same subject included in said different imaged images is overlapped, positional information indicating the relative positional relation of each of said imaged images;
a strip-of-paper image generating step arranged to trim, regarding each of a plurality of said imaged images, in the event of arraying a plurality of said imaged images on a plane based on said positional information, a region on said imaged image from a predetermined reference position on said imaged image to said reference position of another imaged image arrayed in a manner overlapped with said imaged image on said plane to generate a strip-of-paper image including said region; and
a panorama image generating step arranged to generate a single panorama image by arraying and synthesizing each of said strip-of-paper images obtained from a plurality of said imaged images;
wherein in said strip-of-paper image generating step, regarding a plurality of said imaged images, a plurality of said strip-of-paper images are generated from said imaged image while shifting said region on said imaged image in a predetermined direction, and in said panorama image generating step, said panorama image is generated for each position of said region, thereby generating an image group made up of a plurality of said panorama images where the image of the same region on imaging space is displayed.
